# FASCICULE DE BREVET EUROPEEN

(11) **EP 2 027 211 B1**
(45) Date de publication et mention de la délivrance du brevet: **28.03.2012**
(21) Numéro de dépôt: 07788975.6
(22) Date de dépôt: 11.06.2007
(51) Int. Cl.: C08L 77/00, B29B 9/00

(54) **MELANGES ET ALLIAGES A BASE D'UN COPOLYMERE AMORPHE A SEMI-CRISTALLIN, A MOTIF AMIDES ET A MOTIF ETHERS, CES MATERIAUX AYANT DES PROPRIETES OPTIQUES AMELIOREES**
MISCHUNGEN UND LEGIERUNGEN AUF BASIS EINES AMORPHEN BIS SEMIKRISTALLINEN COPOLYMERS MIT AMIDEINHEITEN UND ETHEREINHEITEN, IN DENEN DIESE MATERIALIEN VERBESSERTE OPTISCHE EIGENSCHAFTEN AUFWEISEN
BLENDS AND ALLOYS BASED ON AN AMORPHOUS TO SEMICRYSTALLINE COPOLYMER, COMPRISING AMIDE UNITS AND COMPRISING ETHER UNITS, WHEREIN THESE MATERIALS HAVE IMPROVED OPTICAL PROPERTIES

(30) Priorité: 14.06.2006 FR 0605286; 16.08.2006 US 838021 P
(43) Date de publication de la demande: 25.02.2009
(73) Titulaire: ARKEMA FRANCE, 92700 Colombes (FR)
(72) Inventeur: MONTANARI, Thibaut, 27300 Menneval (FR); BLONDEL, Philippe, 27300 Bernay (FR)
(86) Numéro de dépôt international: PCT/FR2007/051406
(87) Numéro de publication internationale: WO 2007/144531

(56) Documents cités:
- EP-A1- 0 628 602
- EP-A1- 1 227 131
- FR-A1- 2 824 329

## Description

La présente invention porte sur de nouveaux mélanges ou alliages transparents comportant un copolymère à base de motifs amides et de motifs souples polyéthers, ce copolymère étant amorphe ou ayant une cristallinité allant jusqu'à la semi-cristallinité.

Pour mieux situer l'invention et le problème qu'elle résout, nous allons citer cinq catégories de matériaux polyamides existants. Par « matériaux polyamides », on entend des compositions à base de polyamides, copolyamides et alliages de polyamides ou à base de polyamides.

### (1) Matériaux polyamides modifiés choc (PA choc)

Ce sont des alliages de polyamide avec une quantité minoritaire d'élastomère, typiquement autour de 20% en poids. Le polyamide est typiquement un polyamide semi-cristallin. Ces alliages ont l'avantage d'une très bonne tenue au choc, très améliorée par rapport au polyamide seul, typiquement trois fois meilleure ou plus. Ils possèdent également une bonne tenue chimique, une résistance à la déformation à chaud (60°C) suffisante. Ils ont le désavantage d'être opaques, ce qui peut être gênant pour des pièces décoratives.

### (2) Matériaux polyamides amorphes transparents (amPA TR)

Ce sont des matériaux transparents, amorphes ou très peu semi-cristallins, rigides (module de flexion ISO > 1300 MPa), ne déformant pas à chaud, à 60°C, car usuellement de température de transition vitreuse Tg supérieure à 75°C. Cependant, ils sont assez peu résistants au choc, présentant un bien moindre choc ISO Charpy entaillé par comparaison avec les polyamides modifiés choc (typiquement 5 fois moindre), et leur tenue chimique n'est pas excellente, typiquement du fait de leur nature amorphe. Il existe également - mais il s'agit de matériaux moins courants - des polyamides transparents semi-cristallins (ou micro-cristallins), ces matériaux étant également assez rigides et ayant un module de flexion ISO > 1000 MPa.

### (3) Polyéther-bloc-amide et copolymères à motifs éthers et amides (PEBA)

Ce sont des copolyamides à base de motifs éthers et de motifs amides: les polyétheramides, et en particulier, les polyéther-bloc-amide (PEBA). Ce sont des matériaux très souples, résistants au choc, mais dont la transparence est assez faible (45 à 65% de transmission lumineuse à 560 nm pour une épaisseur de 2 mm), tout comme pour leurs homologues polyamides sans motifs éthers: Les Pebax d'Arkema en sont une illustration.

### (4) Polyamides semi-cristallins (PA)

Ce sont typiquement des polyamides aliphatiques linéaires. Leur cristallinité se manifeste par la présence de sphérolites dont la taille est suffisamment grande pour que le matériau ne soit pas très transparent (transmission lumineuse inférieure à 75% à 560 nm). Les PA11, PA12, PA6.12 en sont une illustration.

### (5) Polyamides transparents semi-cristallins (scPA TR)

Ce sont plus précisément des polyamides micro-cristallins où la taille des sphérolites est suffisamment faible pour conserver la transparence.

Dans le **Tableau A** ci-après, on a résumé les différentes propriétés des cinq catégories de polyamides que l'on vient d'indiquer.

### DEFINITIONS du tableau A:

(a) Transparence : Elle se caractérise par la mesure de transmittance à 560 nm au travers d'une plaque polie de 2mm d'épaisseur.
(b) Tenue au choc / à la casse : Elle se caractérise par un test de pliure rapide ou par un choc Charpy entaillé ISO179.
(c) Souplesse : Elle se caractérise par le module de flexion ISO178.
(d) Tenue à chaud : Capacité du polyamide à ne pas se déformer s'il est placé en atmosphère chaude, vers 60°C, et sous l'effet d'un poids plus ou moins important. Pour un polymère amorphe ou essentiellement amorphe, la tenue à chaud est d'autant meilleure que la Tg (température de transition vitreuse) est élevée et supérieure à 75°C. Pour un polymère essentiellement semi-cristallin, la tenue à chaud est d'autant meilleure que la Tm (température de fusion) est élevée et supérieure à 100°C, et surtout, que l'enthalpie de fusion est élevée, cette enthalpie étant le reflet du taux de cristallinité.
(e) Tenue chimique : Aptitude du polyamide à ne pas s'endommager (matification, craquelure; fissure, casse) au contact d'un produit chimique (alcool...) et, en particulier; s'il est placé sous contrainte, c'est-à-dire "stress-cracking".
(f) Fatigue élastique: Aptitude du polyamide à être plié un grand nombre de fois sans casse, retour élastique, par exemple test "Ross-Flex".
(g) Mise en oeuvre, injectabilité : Aptitude du polyamide à se mettre aisément en oeuvre par un procédé d'injection (temps de cycle court, démoulage aisé, pièce non déformée).

Le document EP1227131 décrit une composition transparente à base de polyamide constituée d'un mélange de polyamide contenant des motifs cycloaliphatiques et de polyétheramide.

Le but de l'invention est de trouver de nouvelles compositions transparentes, résistantes au choc, pas trop rigides et même jusqu'à très souples, possédant une bonne tenue ou résistance à la déformation à chaud (60°C) et/ou une bonne tenue chimique. L'aptitude à la résistance à la pliure alternée (fatigue) et l'aptitude à se mettre aisément en oeuvre par injection sont aussi des qualités recherchées. Autrement dit, on a recherché une composition combinant l'essentiel, ou du moins un plus grand nombre, des avantages des trois premières catégories précédentes (PA choc, amPA TR, PEBA).

Les copolymères PEBA appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs souples polyéther étant des liaisons ester ou encore à la classe des polyétheramides lorsque les séquences polyéther sont à extrémités amine.

Différents PEBA sont connus pour leurs propriétés physiques telles que leur flexibilité, leur tenue au choc, leur facilité de mise en oeuvre par injection.

L'amélioration de la transparence des PEBA a déjà fait l'objet de différentes recherches.

Des mélanges entre des PEBA semi-cristallins ont été réalisés mais l'amélioration de la transparence obtenu demeure modeste et bien inférieure à 75% de transmittance (à 560nm, au travers d'une plaque polie de 2 mm). Dans le cas d'un mélange d'un PEBA semi-cristallin de Tg inférieure à 50°C type bloc-PA12/bloc-PTMG avec un autre PEBA semi-cristallin de Tg inférieure à 50°C type bloc-PA11/bloc-PTMG, l'amélioration de transparence atteint au mieux une transmission de 49%, à 560 nm sur 2 mm d'épaisseur, ce qui correspond à un objet encore très nettement voilé à l'oeil. Ce type de mélanges ne peut guère convenir qu'à des objets de faible épaisseur; donc là où le voile sera moins perceptible.

D'une manière générale les copolymères à motifs éthers et amides connus sont constitués de séquences polyamides aliphatiques linéaires et semi-cristallines (par exemple les « Pebax » d'Arkema).

La Société déposante a découvert de façon surprenante que si, au contraire, on utilise des monomères de polyamides de caractère cycloaliphatique (donc non aliphatique linéaire), qu'on les copolymérise avec des polyéthers souples, ce qui donne un copolymère amorphe(A), et qu'ensuite on mélange ledit copolymère obtenu avec un autre polyamide (B), en particulier avec un PEBA semi-cristallin connu (ou autres copolymères à motifs éthers et amides connus), on obtient des compositions transparentes, aux propriétés très améliorées. On obtient notamment des matériaux résistants à la déformation à chaud à 60°C. Ces compositions possèdent une tenue au choc et une flexibilité améliorées. Ces compositions combinent les qualités du constituant amorphe (A), notamment sa Tg qui demeure de façon surprenante quasi-inchangée, et les qualités du PEBA semi-cristallin, notamment son point de fusion et son enthalpie de fusion qui demeurent de façon surprenante quasi-inchangées. Ces compositions ne présentent pratiquement pas les défauts de chacun de leurs constituants, en particulier ne présentent pas la performance moindre en fatigue en flexion alternée ("Rossflex") de (A), et la transparence faible de (B).

Dans l'état antérieur de la technique, pour améliorer les propriétés citées précédemment, des mélanges transparents (ou alliages) de polymères ont été tentés. Par exemple EP 550 308 et EP 725 101 décrivent des alliages de polyamide amorphe transparent combiné à un polyamide semi-cristallin non transparent, le tout donnant un matériau transparent et moins rigide. Cependant ce matériau demeure d'une rigidité élevée (> 1200 MPa de module de flexion ISO) et possède des propriétés au choc modestes (Choc Charpy entaillé ISO de l'ordre de 7 kJ/m2, à comparer à 50 ou plus pour un polyamide choc). De plus, sa Tg a fortement chuté si on la compare à celle du composant amorphe seul. Par exemple, le Cristamid MS1100 d'Arkema, mélange d'un polyamide amorphe de Tg 170°C et de 30% de PA12 semi-cristallin, a une Tg de 110°C. Qui plus est, ce mélange n'a quasiment plus le point de fusion ni l'enthalpie de fusion du composant PA12, même ramenée à la quantité de PA12 contenue. Un autre exemple de ce type de matériau est le Grilamid TR90LX (Société Ems), de Tg bien inférieure à son composant majoritaire, le Grilamid TR90.

Une autre possibilité connue d'amélioration consiste à mélanger au polyamide amorphe, un copolymère semi-cristallin à base de motifs amides et de motifs éthers. Cependant, le niveau de transparence obtenu est bien moindre que dans le cas précédent, et il faut chauffer fortement le mélange pour obtenir une transparence acceptable. De plus, ces mélanges ont encore l'inconvénient de rester assez rigides, en tout cas beaucoup plus rigides que le mélange de la présente invention. Ces mélanges ont aussi l'inconvénient d'une performance en fatigue en flexion alternée ("Rossflex") significativement inférieure aux mélanges de la présente invention.

Si l'on utilise au lieu du polyamide amorphe transparent, ledit copolymère (A), et qu'on le combine avec un polyamide semi-cristallin, en particulier avec un copolyamide semi-cristallin à motifs éthers et à motifs amides (par exemple un polyesterétheramide ou un polyéther-bloc-amide PEBA),on obtient alors non seulement un matériau transparent et résistant à la déformation à chaud à 60°C, mais encore un matériau significativement moins rigide et plus résistant au choc. Ce mélange possède également une résistance chimique améliorée par rapport audit copolymère (A) seul et une résistance à la fatigue élastique améliorée:

Le problème qui consiste à trouver de nouvelles compositions transparentes, résistantes au choc, pas trop rigides et même jusqu'à très souples, aisées à mettre en oeuvre, possédant une bonne résistance à la déformation à chaud (60°C) et/ou une bonne tenue chimique, et/ou une bonne tenue à la fatigue peut donc être résolu par l'utilisation du copolymère (A), en combinant celui-ci sous forme de mélanges ou d'alliages à d'autres polyamides, avantageusement des polyamides semi-cristallins, encore plus avantageusement leur forme copolymérisée avec des motifs éthers, en particulier les PEBA.

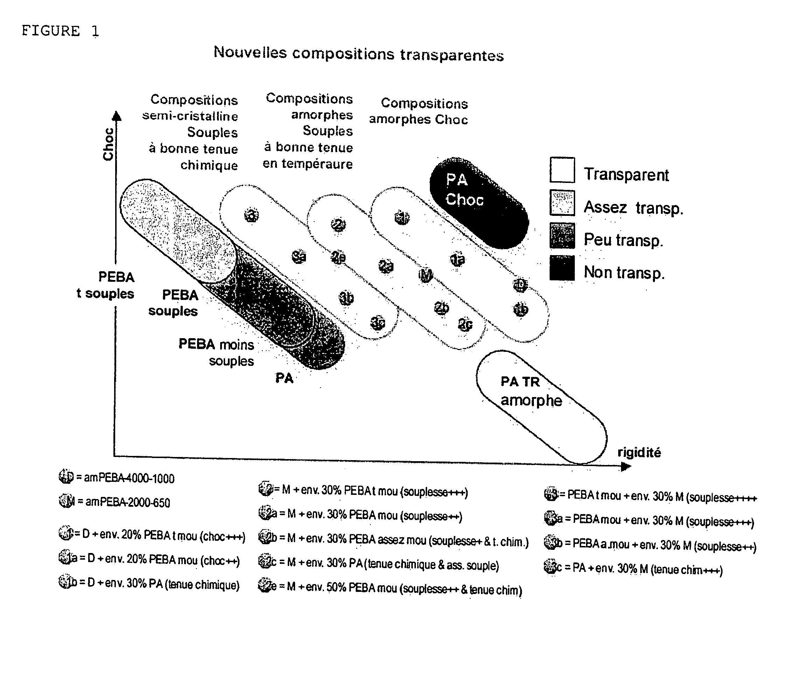

La Figure unique du dessin annexé est un graphique choc (ordonnées) et rigidité (abscisses) sur lequel on a fait figurer trois nouvelles familles de compositions ou matériaux avantageux de l'invention, réunissant chacune plus de propriétés avantageuses que les trois catégories existantes de matériaux polyamides, à savoir les polyamides choc (PA choc), les polyamides transparents amorphes (am PATR) et les copolyamides élastomères à motifs éthers (PEBA). Sur ce graphique, les trois nouvelles familles de l'invention sont représentées par les points référencés 1, 1a, 1b ; 2, 2a, 2b, 2c, 2d, 2e; et 3, 3a, 3b, 3c, les copolymères (A) étant illustrés par les points référencés D et M.

Sur ce graphique nous montrons donc les trois familles de compositions transparentes, chacune présentant une combinaison de propriétés avantageuses significativement distinctes et pouvant ainsi répondre de façon plus précise à un problème posé. A l'intérieur des familles, les compositions peuvent être amenées à varier encore plus finement pour optimiser le profil de propriétés, afin de répondre encore plus précisément à un problème posé.

Par problème posé, on entend bien entendu l'obtention des propriétés de transparence, de résistances au choc, de niveau de souplesse, de résistance à la déformation à chaud ou de tenue chimique, mais chacune étant susceptible d'être pondérée différemment afin de répondre plus précisément au problème posé.

Pour jouer finement sur la pondération de ces propriétés désirées, nous jouerons sur les paramètres de compositions suivants :
- Nature du copolymère (A): notamment proportion de motifs éthers et/ou segments polyéther car son augmentation augmente la souplesse et la résistance au choc, mais aussi nature du polyéther (hydrophilie et autres propriétés typiques des PEBA), et également nature des motifs amides et/ou segments polyamides), ce qui permet de jouer sur la Tg et donc sur la tenue en température, et enfin taux de motifs amides, ce qui permet aussi de jouer sur la Tg. La variation de ces paramètres joue également sur d'autres propriétés, ce qui permet de répondre plus avantageusement au problème et/ou de répondre à d'autres problèmes ;
- Taux de copolymère (A) : si celui ci est élevé, la Tg sera plus élevée, ce qui est bénéfique pour la résistance à la déformation en température (60°C);
- Nature de l'autre ou des autres ingrédients du mélange (ingrédients B) : l'ingrédient B peut être un PEBA très souple, ce qui sera bénéfique pour le choc et la souplesse ; ce peut être un PEBA moyennement souple, ce qui rend le mélange particulièrement aisé à faire et conduit à un compromis harmonieux de toutes les propriétés ; ce peut être un PEBA assez rigide, voire un polyamide, ce qui augmentera particulièrement la tenue chimique ; ce peut même être une composition de PA aliphatique semi-cristallin (ou micro-cristallin, c'est-à-dire semi-cristallin, cristallin sous forme d'édifices cristallins, sphérolites, suffisamment fines, donc ne diffractant pas la lumière et conduisant à un matériau transparent), même majoritaire en ce dernier, ce qui donnera un matériau transparent aux propriétés choc améliorées ; ce peut même être une composition de PA amorphe, même majoritaire en ce dernier, ce qui peut conduire à des propriétés intermédiaires avec celles des PA amorphes, dans le cas où, par exemple, il faille conserver un minimum de rigidité tout en améliorant le choc ;
- Proportions de l'autre ou des autres ingrédients du mélange (ingrédients B): une proportion élevée de PEBA souple améliore la souplesse et la tenue au choc ; une proportion élevée de polyamide semi-cristallin améliore la tenue chimique ;
- Utilisation des mélanges desdits copolymères (A) : l'utilisation d'un copolymère très mou et d'un copolymère moins mou peut être avantageuse pour augmenter la tenue au choc tout en conservant un certain niveau de rigidité ;
- Utilisation des mélanges en ce qui concerne les autres polyamides, copolyamides ou alliages : En mélangeant, en particulier, un PEBA avec un PA, cela peut conduire à une combinaison avantageuse de tenue au choc et de tenue chimique élevées, et/ou à l'obtention d'un meilleur niveau de transparence, notamment en utilisant un polyamide catalysé (en particulier par des composés du phosphore tels que H₃PO₄, H₃PO₃, H₃PO₂);
- Utilisation des additifs usuels des polyamides, tels que les stabilisants, colorants, plastifiants, modifiants choc, à choisir avantageusement avec un indice de réfraction proche pour conserver une transparence élevée.

Les compositions selon l'invention apportent une combinaison d'avantages que nous pouvons résumer dans le **tableau A** ci-après.

Abréviations :
- AmPA TR : polyamide amorphe (ou quasi) et transparent
- PA :polyamide semi-cristallin
- ScPA TR : polyamide semi-cristallin transparent (micro-cristallin)

**Tableau A**

| **Catégorie de polyamide** | **Transparence (a)** | **Tenue au choc/à la casse (b)** | **Souplesse (c)** | **Tenue à chaud (d)** | **Tenue chimique (e)** | **Fatigue élastique (f)** | **Mise en oeuvre (g)** |
|---|---|---|---|---|---|---|---|
| (1) PA Choc | - | +++ | + | ++ | +++ | + | +++ |
| (2) amPA TR | +++ | - | - à -- | ++ à +++ | - à --- | - à + | - |
| (3) PEBA | - à + | + à +++ | + à +++ | + à ++ | + à ++ | +++ | ++ à +++ |
| (4) PA | - à - | + | + | ++ | +++ | + | +++ |
| (5) scPA TR | ++ à +++ | + | - à + | - à + | + à +++ | - à + | - |
| **Présente invention** | **++ à +++** | **+ à +++** | **+ à +++** | **+ à ++** | **+ à ++** | **- à ++** | **++** |

| | | | | | | | |
|---|---|---|---|---|---|---|---|
| Notes de -- = très mauvaise à +++ = très bon | | | | | | | |

La présente invention a donc pour objet un mélange ou alliage transparent comprenant, en poids, le total étant 100 % :
(A) 1 à 99% d'au moins un constituant copolymère :
   - présentant une transparence élevée qui est telle que la transmittance à 560 nm sur plaque de 2 mm d'épaisseur est supérieure à 65% ;
   - présentant une température de transition vitreuse au moins égale à 75°C ; et
   - étant amorphe ou présentant une cristallinité allant jusqu'à la semi-cristallinité ; et
   - comportant :
      (A1) des motifs amides parmi lesquels se trouve au moins un motif cycloaliphatique ;
      (A2) des motifs souples éthers ;
(B) 99 à 1 % d'au moins un constituant polymère choisi parmi :
   (Ba) les copolyamides semi-cristallins à motifs amides (Ba1) et à motifs éthers (Ba2), ayant une température de transition vitreuse (T_{g}) inférieure à 75°C ;
   (Bb) les polyamides ou copolyamides semi-cristallins sans motifs éthers, ayant une température de fusion (Tm) supérieure à 100°C ;
   (Bc) les polyamides ou copolyamides transparents, sans motifs éthers, ayant une température de transition vitreuse (Tg) supérieure à 75°C et étant amorphes ou faiblement cristallins ayant une enthalpie de fusion lors de la deuxième chauffe d'une DSC ISO (delta Hm(2)) inférieure à 25J/g, la masse étant rapportée à la quantité de motifs amides contenus ou de polyamide contenus, cette fusion correspondant à celle des motifs amides ; et les alliages à base de tels polyamides ou copolyamides ; et
(C) 0 à 50% en poids d'au moins un polyamide, copolyamide, copolyamide à motifs éthers ou alliage à base de tels polyamides ou copolyamides autres que ceux utilisés en (A) et (B) ci-dessus ; et/ou d'au moins un additif usuel pour polymères et copolymères thermoplastiques ;
le choix des motifs ou monomères entrant dans la composition de (A), (B) et (C), ainsi que le choix des proportions desdits motifs ou desdits monomères étant tel que le mélange ou alliage résultant présente une transparence élevée telle que la transmittance à 560 nm sur plaque de 2 mm d'épaisseur est supérieure à 50%.

Le constituant copolymère (A) peut être amorphe. Il peut aussi être quasi-amorphe, ayant une cristallinité telle que l'enthalpie de fusion lors de la deuxième chauffe d'une DSC ISO (delta Hm(2)) soit inférieure ou égale à 10 J/g, la masse étant rapportée à la quantité de motifs amides contenus ou de polyamide contenu, cette fusion étant celle des motifs amides ; il peut enfin avoir une cristallinité (dite intermédiaire) telle que l'enthalpie de fusion lors de la deuxième chauffe d'une DSC ISO (delta Hm(2)) soit comprise entre 10 et 30 J/g, préférentiellement entre 10 et 25 J/g, la masse étant rapportée à la quantité de motifs amides contenus ou de polyamide contenu, cette fusion étant celle des motifs amides. De tels matériaux sont des produits au comportement intermédiaire entre des polymères amorphes ou essentiellement amorphes, c'est-à-dire avec une enthalpie de fusion à la deuxième chauffe entre 0 et 10 J/g, qui ne sont plus à l'état solide au-dessus de leur Tg, et des polymères véritablement semi-cristallins, qui sont des polymères qui demeurent à l'état solide, donc qui conservent bien leur forme au-delà de leur Tg. Ces produits au comportement intermédiaire sont donc dans un état plus ou moins solide, mais aisément déformables au-delà de leur Tg. Comme leur Tg est élevée, dans la mesure où l'on ne les utilise pas au-delà de cette Tg, de tels matériaux sont intéressants, d'autant que leur tenue chimique est supérieure à celle des matériaux amorphes.

Par delta Hm(2), on entend l'enthalpie de fusion lors de la deuxième chauffe d'une DSC selon la norme ISO, la DSC ("Differential Scanning Calorimetry") étant l'analyse calorimétrique différentielle.

Le constituant copolymère (A) peut présenter une température de transition vitreuse (T_{g}) au moins égale à 90°C.

Le constituant copolymère (A) peut également présenter une transparence qui est telle que la transmittance à 560 nm sur plaque de 2mm d'épaisseur est supérieure à 75 %.

Le constituant copolymère (A) à motifs amides (A1) et à motifs éthers (A2) peut se présenter sous forme de blocs polyamide-polyéther.

Les motifs (A1) peuvent être constitués majoritairement d'une association équimolaire d'au moins une diamine et d'au moins un diacide carboxylique, la ou les diamines étant majoritairement cycloaliphatiques et le ou les diacides carboxyliques étant majoritairement aliphatiques linéaires, les motifs amides pouvant éventuellement comprendre, mais de façon minoritaire, au moins un autre comonomère de polyamide. Par le terme « majoritairement », on entend « à raison de plus de 50% en poids (> 50%)». Par l'expression « de façon minoritaire », on entend « à raison de moins de 50% en poids (< 50%)».

La ou les diamines cycloaliphatiques peuvent être avantageusement choisies parmi le bis-(3-méthyl-4-aminocyclohexyl)-méthane (BMACM), le para-aminodicyclohexyl méthane (PACM), l'isophoronediamine (IPD), le bis(4-aminocyclohexyl)-méthane (BACM), le 2,2-bis(3-méthyl-4-aminocyclohexyl)propane (BMACP), la 2,6-bis(amino méthyl)norbornane (BAMN).

Avantageusement, une seule diamine cycloaliphatique, en particulier le bis-(3-méthyl-4-aminocyclohexyl)-méthane a été utilisée comme diamine pour l'obtention des motifs amides (A1).

Au moins une diamine non cycloaliphatique peut entrer dans la composition des monomères des motifs amides (A1), à raison d'au plus 30% en moles par rapport aux diamines de ladite composition. Comme diamine non cycloaliphatique, on peut citer les diamines aliphatiques linéaires, telles que la 1,4-tétraméthylène diamine, la 1,6-hexaméthylènediamine, la 1,9-nonaméthylènediamine et la 1,10-décaméthylènediamine.

Le ou les diacides carboxyliques aliphatiques peuvent être choisis parmi les diacides carboxyliques aliphatiques ayant de 6 à 36 atomes de carbone, de préférence de 9 à 18 atomes de carbone, en particulier l'acide 1,10-décanedicarboxylique (acide sébacique), l'acide 1,12-dodécanedicarboxylique, l'acide 1, 14-tétradécanedicarboxylique et l'acide 1,18-octadécanedicarboxylique.

Au moins un diacide carboxylique non aliphatique peut entrer dans la composition des monomères des motifs amides à raison d'au plus 15% en moles par rapport aux diacides carboxyliques de ladite composition. De préférence, le diacide carboxylique non aliphatique est choisi parmi les diacides aromatiques, en particulier l'acide isophtalique (I), l'acide téréphtalique (T) et leurs mélanges.

Le ou les monomères entrant de façon minoritaire dans la composition des monomères des motifs amides (A1) peuvent être choisis parmi les lactames et les acides alpha-oméga amino-carboxyliques.

Le lactame est, par exemple, choisi parmi le caprolactame, l'oenantholactame et le lauryllactame.

L'acide alpha-oméga aminocarboxylique est, par exemple, choisi parmi l'acide aminocaproïque, l'acide amino-7-heptanoïque, l'acide amino-11-undécanoïque ou l'acide amino-12-dodécanoïque.

Avantageusement, le constituant copolymère (A) compte des motifs amides (A1) dont le nombre de carbones par amide est en moyenne au moins égal à 9.

Les blocs polyamides sont, par exemple, choisis parmi BMACM.6, BMACM.9, BMACM.10, BMACM.12, BMACM.14, BMACM.16, BMACM.18 et leurs mélanges.

La masse moléculaire en nombre des blocs polyamides est avantageusement comprise entre 500 et 12000 g/mole, de préférence entre 2000 et 6000 g/mole.

Les motifs éthers (A2) sont, par exemple, issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G)
le polytétraméthylène glycol (PTMG) et leurs mélanges ou leurs copolymères.

Les blocs souples polyéthers peuvent comprendre des séquences polyoxyalkylène à bouts de chaînes NH₂, de telles séquences pouvant être obtenues par cyanoacétylation de séquences polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman. Voir également brevets JP 2004346274, JP 2004352794 et EP1482011).

La masse moléculaire moyenne en nombre des blocs polyéthers est avantageusement comprise entre 200 et 4000 g/mole, de préférence entre 300 et 1100 g/mole.

Le copolymère (A) peut être préparé par le procédé suivant lequel:
- dans une première étape, on prépare les blocs polyamide PA par polycondensation
   o de la ou des diamines ;
   o du ou des diacides carboxyliques ; et le cas échéant, du ou des comonomères choisis parmi les lactames et les acides alpha-oméga aminocarboxyliques ;
   o en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

La méthode générale de préparation en deux étapes des copolymères de l'invention est connue et est décrite, par exemple, dans le brevet français FR 2 846 332 et dans le brevet européen EP 1 482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 15 mm Hg (2000 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

On peut aussi considérer le procédé de préparation du copolymère (A) tel que l'on ajoute tous les monomères au début, soit en une seule étape, pour effectuer la polycondensation :
- de la ou des diamines ;
- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs PE (polyéther) ;
- en présence d'un catalyseur pour la réaction entre les blocs souples PE et les blocs PA.

Avantageusement, on utilise comme limiteur de chaîne ledit diacide carboxylique, que l'on introduit en excès par rapport à la stoechiométrie de la ou des diamines.

Avantageusement, on utilise comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation à une température de 240 à 280°C.

On pourra aussi choisir un copolymère (A) dont les motifs souples éthers sont choisis de nature très hydrophile, de préférence de nature bloc polyéther de type PEG, PPG ou PO3G, ce qui confère un surcroît avantageux de propriétés antistatiques et imper-respirantes à la composition (c'est à dire permettant le passage de la vapeur d'eau, mais non de l'eau liquide). Cette composition peut être, de surcroît, additivée par des additifs antistatiques tiers afin de renforcer l'effet antistatique global, et aussi par des additifs permettant d'accroître la compatibilité de mélange avec d'autres polymères. Le copolymère (A), seul ou ainsi additivé, confère au mélange ou à l'alliage de la présente invention un surcroît de propriétés antistatique ou imper-respirantes.

Le polymère (B) peut être un copolyamide semi-cristallin (Ba) ayant une température de fusion supérieure à 100°C, de préférence supérieure à 150°C et de température de transition vitreuse (Tg) inférieure à 65°C, et comportant :
(Ba1) des motifs amides aliphatiques ou majoritairement aliphatiques ;
(Ba2) des motifs éthers.

Le copolyamide (Ba) à motifs amides (Ba1) et à motifs éthers (Ba2) peut se présenter avantageusement sous forme de blocs polyamide-polyéther.

Les motifs amides (Ba1) peuvent être constitués majoritairement d'un lactame ou d'un acide alpha, oméga-amino carboxylique, et/ou d'une association équimolaire d'au moins une diamine et d'au moins un diacide carboxylique, la ou les diamines étant majoritairement aliphatiques linéaires, les motifs amides pouvant éventuellement comprendre, mais de façon minoritaire, au moins un autre comonomère de polyamide.

Le constituant copolymère (B) peut avantageusement compter des motifs amides (Ba1) de nature aliphatique linéaire dont le nombre de carbones par amide est en moyenne au moins égal à 9.

Les blocs polyamides aliphatiques linéaires précités peuvent être choisis parmi le PA 12, le PA 11, le PA 10.10, le PA 10.12, le PA 10.14, le PA 6.10, le PA 6.12, le PA 6.14 et le PA 6.18, étant choisis en particulier parmi le PA 10.10, le PA 10.12, le PA 10.14, le PA 6.10, le PA 6.12, le PA 6.14 et le PA 6.18.

Les motifs éthers (Ba2) peuvent être choisis parmi ceux indiqués ci-dessus pour les motifs éthers (A2), étant avantageusement de même nature et de taille ou masse voisine que les motifs éthers (A2) dudit mélange ou alliage.

Le copolymère (Ba) peut avoir notamment une cristallinité telle que l'enthalpie de fusion lors de la deuxième chauffe d'une DSC ISO (delta Hm(2)) soit au moins égale à 25 J/g, la masse étant rapportée à la quantité de motifs amides contenus ou de polyamide contenu, cette fusion correspondant à celle des motifs amides.

Avantageusement, les motifs amides (A1) représentent au moins 50% en poids dudit constituant copolymère (A), et les motifs amides (Ba1) représentent au moins 50% en poids du copolyamide (Ba).

Avantageusement les motifs éthers (A2) représentent au moins 15% en poids dudit constituant copolymère (A), et les motifs (Ba2) représentent au moins 15% en poids de (Ba).

Les polyamides et copolyamides semi-cristallins (Bb) ont notamment une température de fusion (Tm) supérieure à 150°C.

Ils peuvent être choisis parmi les PA12 et le PA11. Ils peuvent aussi être choisis parmi le PA10.10, le PA10.12, le PA10.14, le PA 6.10, le PA6.12, le PA6.14 et le PA6.18.

Les polyamides (Bc) amorphes ou quasi amorphes, transparents, (Bc) peuvent être choisis parmi les polyamides type BMACM.12, BMACM.14, PACM.12, IPD.12, BMACM.12/12 et, plus généralement, parmi les polyamides à base de diamines BMACM, PACM, IPD et de diacide carboxylique en C14, C12, C10, leurs copolymères ou mélanges.

Le constituant polymère (B) peut être essentiellement constitué de:
- polyamides ou copolyamides amorphes transparents et polyamides ou copolyamides semi-cristallins, en particulier alliages de polyamides BMACM.12, PACM.12, IPD.12 ou de leurs copolyamides avec le PA12 ;
- polyamides ou copolyamides amorphes transparents et copolyamides semi-cristallins avec des motifs éthers ;
- polyamides ou copolyamides semi-cristallins et copolyamides semi-cristallins avec des motifs éthers.

Le ou les additifs usuels peuvent être choisis parmi les colorants, les stabilisants tels que les stabilisants thermiques et les stabilisants aux UV, les agents de nucléation, les plastifiants, les agents améliorant la résistance aux chocs et les agents de renforcement; ledit ou lesdits additifs ayant, de préférence, un indice de réfraction proche de celui du copolymère. (A), (B) ou éventuellement (C).

La nature et les proportions de (A) et de (B) et, le cas échéant, d'un constituant polymère de (C), peuvent être telles que la composition résultante est amorphe et a une température de transition vitreuse supérieure à 75°C.

Egalement, la nature et les proportions de (A) et de (B) et, le cas échéant, d'un constituant polymère de (C), peuvent être telles que la composition résultante est semi-cristalline, de point de fusion Tm supérieur à 100°C, de préférence supérieur à 150°C, et d'enthalpie de fusion lors de la deuxième chauffe d'une DSC ISO (delta Hm(2)) supérieure à 10J/g, préférentiellement à 25J/g, la masse étant rapportée à la quantité de motifs amides contenus ou de polyamide contenu, afin de garantir une cristallinité suffisante pour rester à l'état suffisamment solide au-delà de la température de transition vitreuse (Tg) et ne se liquéfier qu'au-delà de son point de fusion Tm.

Par ailleurs, avantageusement, le choix des motifs ou monomères entrant dans la composition de (A), (B) et (C), ainsi que le choix des proportions desdits motifs ou desdits monomères sont tels que le mélange ou alliage résultant présente une transparence élevée telle que la transmittance à 560 nm sur plaque de 2 mm d'épaisseur est supérieure à 75%.

Conformément à une caractéristique particulièrement intéressante du mélange ou alliage selon la présente invention dans (A) ou (Ba), préférentiellement dans (A) et (Ba); les motifs souples éthers sont choisis de nature très hydrophile, de préférence de nature bloc polyéther de type PEG ou ses copolymères avec du PPG ou du PO3G, ce qui confère des propriétés antistatiques et imper-respirantes c'est-à-dire permettant le passage de la vapeur d'eau, mais non de l'eau liquide, audit mélange ou alliage, ce mélange ou alliage pouvant être de surcroît additivé par des additifs antistatiques tiers afin de renforcer l'effet antistatique global, et par des additifs permettant d'accroître la compatibilité de mélange avec d'autres polymères, le mélange ou alliage, seul ou ainsi additivé, pouvant en effet être ensuite utilisé en tant qu'additif d'un autre polymère ou matériau afin de lui conférer un surcroît de propriétés antistatique ou imper-respirantes.

En particulier, le mélange ou alliage additivé peut avantageusement être transparent, les ingrédients dudit mélange ou alliage pouvant être choisis de telle sorte que l'indice de réfraction de celui-ci soit très proche de celui du polymère ou matériau à additiver.

Pour préparer les mélanges ou alliages selon la présente invention, on peut mélanger les constituants (A), (B) et le cas échéant (C) qui sont sous forme de granulés, ce mélange étant ensuite injecté à une température comprise entre 230 et 330°C sur une presse à injection pour obtenir les objets et éprouvettes désirés.

On peut aussi mélanger les constituants (A), (B) et le cas échéant (C) à l'état fondu, en particulier dans une extrudeuse, à une température comprise entre 230 et 330°C, et on les récupère sous forme de granulés, granulés qui seront par la suite injectés à une température comprise entre 230 et 330°C, sur une presse à injection pour obtenir les objets et éprouvettes désirés.

Dans le cas où le mélange ou alliage comprend des additifs au constituant (Ba), le procédé comprend avantageusement les étapes suivantes :
- dans une première étape, on mélange le constituant (Ba) à l'état fondu avec lesdits additifs, en particulier sur une extrudeuse, la composition étant alors récupérée sous forme de granulés ;
- dans une deuxième étape, on mélange la composition obtenue à la première étape à des granulés du constituant polymère (A).

La présente invention a également pour objet un article façonné, tel que fibre, tissu, film, feuille, jonc, tube, pièce injectée, notamment transparent ou translucide comprenant le mélange ou alliage tel que défini ci-dessus , lequel peut être réalisé sous la forme d'un mélange à sec ou après un compoundage sur extrudeuse.

Ainsi, le mélange ou alliage selon la présente invention est avantageux pour la fabrication aisée d'articles, en particulier d'articles ou éléments d'articles de sport, devant notamment présenter à la fois une bonne transparence, une bonne résistance au choc et une bonne endurance aux agressions mécaniques, chimiques, UV, thermiques. Parmi ces articles de sport, on peut citer des éléments de chaussures de sport; des ustensiles de sport tels que des patins à glace ou autres articles de sports d'hiver et d'alpinisme, des fixations de skis, des raquettes, des battes de sport, des planches, des fers à cheval, des palmes, des balles de golf, des véhicules de loisirs, en particulier ceux destinés aux activités par temps froid.

On peut également mentionner, d'une manière générale, les articles de loisirs, de bricolage, les outils et équipements de voirie soumis aux agressions climatiques et mécaniques, les articles de protection, tels que les visières des casques, les lunettes, ainsi que les branches de lunettes. On peut citer aussi, à titre d'exemples non limitatifs, les éléments de voiture, tels que protège-phares, rétroviseurs, petites pièces de voitures tout terrain, les réservoirs, en particulier, de cyclomoteurs, motos, scooters, soumis aux agressions mécaniques et chimiques, la visserie PMMA, les articles cosmétiques soumis aux agressions mécaniques et chimiques, les bâtons de rouges à lèvres, les manomètres, les éléments de protection esthétiques tels que les bouteilles de gaz.

Les exemples, qui suivent, illustrent la présente invention sans toutefois en limiter la portée.

### EXEMPLES

Dans les Exemples, Réf ., Exemples Comparatifs, Essais ci-dessous, les pourcentages sont en poids sauf indications contraires et les abréviations utilisées sont les suivantes :
- BMACM : 3,3'diméthyl 4,4' diamino dicyclo hexyl méthane
- PACM : 4,4' diamino dicyclo hexyl méthane, que l'on trouve avec des rapports d'isomères variables ; on peut ainsi distinguer la « PACM20 » d'Air Product et la PACM plus riche en isomère trans-trans, la Dicycan de BASF, qui contient plus de 45% d'isomère trans-trans et que l'on appelera « PACM45 »
- AT : acide téréphtalique (diacide carboxylique)
- AI : acide isophtalique (diacide carboxylique)
- LA12 : lactame 12
- C14 : acide tétra décanedioïque (diacide carboxylique)
- C12 : acide dodécanedioïque (diacide carboxylique)
- C10 : acide sébacique (diacide carboxylique)
- PTMG : un polyéther, à savoir le poly-tétra-méthyl-glycol.
- PTMG 650 : PTMG de masse 650 grammes
- PTMG 1000 : PTMG de masse 1000 grammes
- PEBA 12/PTMG 2000/1000 est un copolymère à blocs de polyamide 12 de masse 2000 g et à blocs souples de polyéther PTMG de masse 1000 g.
- PEBA 12/PTMG 4000/1000 est un copolymère à blocs de polyamide 12 de masse 4000 g et à blocs souples de polyéther PTMG de masse 1000 g.
- PEBA 12/PTMG 5000/650 est un copolymère à blocs de polyamide 12 de masse 5000 g et à blocs souples de polyéther PTMG de masse 650 g.
- PEBA 11/PTMG 5000/650 est un copolymère à blocs de polyamide 11 de masse 5000 g et à blocs souples de polyéther PTMG de masse 650 g.
- PEBA 12/PEG 4500/1500 est un copolymère à blocs de polyamide 12 de masse 4500 g et à blocs souples de polyéther PEG de masse 1500 g.
- PA11 BESHV0 : polyamide 11 d'Arkema de masse moléculaire moyenne en poids comprise entre 45000 et 50000 grammes/mole .
- PA12 AESNO : polyamide 12 de masse moléculaire moyenne en poids comprise entre 45000 et 50000 grammes/mol BMACM. AT/BMACM. AI/ LA12 : polyamide amorphe de Tg 170°C et de composition molaire : 1 BMACM ; 0.7 AT ; 0.3 AI ; 1 LA12.
- PEG : poly-éthylène-glycol
- PE : polyéther
- Dans le cas de mélange de diacide, on indique leur proportion en mol.

### DÉFINITIONS des tableaux ci-dessous :

➢ Montée en viscosité : Elle représente l'aptitude à la polymérisation et en conséquence à l'obtention d'un polymère de masse suffisante, et donc de viscosité suffisante, ce qui se traduit par une augmentation du couple ou de la puissance du moteur d'agitation du polymériseur. Cette montée en viscosité se réalise sous azote ou sous vide. Cette montée en viscosité peut être possible (notée "oui" dans les tableaux qui suivent) ou pas(notée "non" dans les tableaux qui suivent).
➢ Tg : Point d'inflexion au deuxième passage par DSC (DSC = analyse thermique différentielle) Tg : température de transition vitreuse mesurée selon une DMA. Il s'agit de la température donnée par le pic de la tangente delta
➢ Transparence : elle est caractérisée par une mesure de transmission lumineuse à une longueur d'onde de 560nm au travers d'une plaque polie de 2mm d'épaisseur. On mesure une quantité de lumière transmise exprimée en pourcent.
➢ Opacité - Transparence : Elle correspond au rapport de contraste et pourcentage de lumière transmise ou réfléchie à la longueur d'onde de 560 nm sur une plaque de 2 mm d'épaisseur.
➢ Module de flexion. Soit selon ISO (MPa) sur barreaux 80*10*4mm ou soit module E' à 23°C obtenu lors d'une mesure de DMA.
➢ Elasticité : coefficient α (alpha) : déterminé graphiquement au cours d'une analyse de nervosité : amplitude en fonction du temps. Plus la valeur est élevée, plus le matériau est nerveux et élastique.
➢ Fatigue : test de RossFlex ASTM 1052. Une éprouvette plane de 2mm d'épaisseur, percée d'un trou de 2.5mm de diamètre, est pliée, à la hauteur de ce trou, à 90° alternativement, à -10°C, le but étant de supporter le plus grand nombre possible de cycles sans casser.
➢ Tenue à chaud : Capacité du polyamide à ne pas se déformer s'il est placé en atmosphère chaude, vers 60°C, et sous l'effet d'un poids plus ou moins important. Pour un polymère amorphe ou essentiellement amorphe, la tenue à chaud est d'autant meilleure que la Tg (température de transition vitreuse) est élevée et supérieure à 75°C. Pour un polymère essentiellement semi-cristallin, la tenue à chaud est d'autant meilleure que la Tm (température de fusion) est élevée et supérieure à 100°C, et surtout, que l'enthalpie de fusion est élevée, cette enthalpie étant le reflet du taux de cristallinité.
➢ Allongement à la rupture (%) : Traction sur ISOR527
➢ Viscosité : Viscosité inhérente en dl/g à partir de 0.5g solubilisé à 25°C dans le métacrésol
➢ Jaunissement : il s'agit d'une mesure de Yellow Index (YI) sur granulés
➢ Antistatisme. On caractérise l'antistatisme par une mesure de résistivité superficielle (ohm) selon ASTM D257 à 20°C sous 65% d'humidité relative, sous une tension continue de 100V.
➢ Imper-respirabilité ou perméabilité à la vapeur d'eau. Elle est estimée selon la norme ASTM 96 E BW à 38°C et 50% d'humidité relative sur un film de 25µm.
➢ Tm : temperéature de fusion mesure selon une DSC ISO, lors de la 2eme chauffe.
➢ Tc : temperéature de cristallisation mesure selon une DSC ISO, lors de l'étape de refroidissement.
➢ DSC : Differential Scanning Calorimetry ou analyse colorimétrique différentielle ISO 11357.
➢ DMA : Differential Mechanical Analysis ou analyse mécanique différentielle ISO 6721.
➢ Test de tenue chimique (ESC éthanol). Des haltères de 2 mm d'épaisseur sont pliées à 180° et sont immergées dans des solutions aqueuses d'éthanol, de plus en plus concentrée. La concentration en éthanol est exprimée en %. On observe s'il y a casse ou fissuration de l'haltère. On retient comme critère la solution la plus concentrée n'ayant pas entraîné de casse ou de fissure. Plus le chiffre est élevé, meilleure est le matériau.
➢ Test d'injectabilité. Les compositions sont injectées dans un moule spirale d'épaisseur 2mm à une pression donnée de 1200 bar. On mesure ensuite la longueur que la matière fondue a été en mesure de remplir (en mm).
➢ Test de choc Charpy entaillé. Il est réalisé sur des barreaux entaillés selon la norme ISO179.
➢ Semi-cristallin : un polymère semi-cristallin, notamment un polyamide, est un polymère ayant une température de fusion avec une enthalpie de fusion significative, supérieure à 10J/g, préférentiellement supérieure à 25j/g (mesure réalisée lors d'une DSC ISO, lors de la deuxième chauffe), ce qui signifie que le polymère conserve un état essentiellement solide au delà de sa température de transition vitreuse, (Tg).
➢ Amorphe : un polymère amorphe, notamment un polyamide, est un polymère n'ayant pas de point de fusion ou ayant un point de fusion peut marqué, c'est à dire avec une enthalpie de fusion inférieure à 10 J/g, mesure réalisée lors d'une DSC ISO, lors de la deuxième chauffe. Ce polymère quitte donc sont état solide au delà de sa température de transition vireuse, Tg.

### • Exemples de mélanges binaires (A) + (B) selon l'invention

### Préparation des copolymère (A), Essais 1 à 7

Mode opératoire : Ce sont des essais en 2 étapes. On a préparé des PEBA à partir de blocs PA à base de diamine cycloaliphatique selon le mode opératoire suivant : chargement de la diamine cycloaliphatique et des diacides dans un autoclave de 80 l. le réacteur purgé à l'azote et fermé, on chauffe à 260°C sous pression et sous agitation de 40 tr/mn Après un maintien d'une heure, on détend sous pression atmosphérique et on ajoute le polyéther et le catalyseur. Nous mettons le réacteur sous vide en 30 mn pour atteindre 50 mbar (20 mbars si nécessaire). La montée du couple dure environ deux heures. La viscosité atteinte, le réacteur est remis a pression atmosphérique et le produit est granulé et séché sous vide à 75°C.

### Essai 5

On charge pour la 1ére étape
➢ BMACM: 16.446 kg
➢ Acide en C10 (acide sébacique) : 15.085 kg
➢ Eau: 0.5 kg

Puis pour la2éme étape, on ajoute 3,51 Kg de PTMG 650 et 45,5 g de catalyseur [butylate de zirconium : Zr(OBu)4].

Dans le **tableau 1** ci-dessous le PACM 45 correspond à un PACM avec plus de 45% d'isomère trans-trans et la Ref. 2 est un produit qui a une température de fusion de 229°C et une enthalpie de 26J/g.

Le **tableau 2** correspond à des mélanges de PEBA semi-cristallins (Ba). On constate que la transparence n'est jamais >50%.

Le **tableau 3** correspond à des mélanges de PA amorphes transparents et de PEBA semi-cristallins (Ba). Le polyamide amorphe est cycloaliphatique et comporte des motifs polyamides proches du dit copolymère (A). Le PEBA est le même que dans les exemples cités après. La transparence des mélanges entre PEBA semi-cristallin et PA amorphe est largement inférieure à 75% et la tenue fatigue est très en retrait par rapport au PEBA.

Le **tableau 4** correspond à des mélanges de PA amorphes transparents et de PA semi-cristallins. Le BMACM.AT/BMACM.AI/La12 est un polyamide amorphe de composition molaire : 1 mol BMACM; 0,7 mol AT ; 0,3 mol AI ; 1 mol La12. Nous montrons qu'un PA semi-cristallin rend transparente la composition mais fait baisser sa Tg, de ce fait la HDT, tenue mécanique à chaud, sera d'autant réduite.

Le **tableau 5** correspond à des mélanges de (A) et de PEBA semi-cristallins (Ba). La DMA montre que, par rapport au comparatif 12 (contrairement aux mélanges du tableau 4, comp.10 & 11), il n'y a pas de baisse significative de la Tg, ni de la Tm et de son enthalpie, cette dernière étant rapportée à la quantité de PA12 (semi-cristallin). La tenue thermique est donc préservée au mieux. Comparé à des PEBA se situant dans la même gamme de souplesse (module E'), on obtient de bien meilleures transparences. Ces exemples s'injectent très facilement (pas de défauts sur la pièce). Le moulage est effectué à 275°C.

Le **tableau 6** correspond à des mélanges de (A) et de PA semi-cristallins (Bb). Il est aussi possible d'avoir une transparence nettement améliorée en mettant très peu dudit copolymère (A) dans un PA semi-cristallin. Comparativement à (A) seul, la tenue chimique est améliorée. Le moulage est effectué à 295°C.

Le **tableau 7** correspond à des mélanges de (A) et de PEBA mi-cristallins (Ba). Le moulage est effectué à moulée à 280°C.

Le **tableau 8** correspond à un mélange anti-statique et imper-respirant.

Le copolymère Essai 3 se distingue essentiellement de l'homopolyamide amorphe BMACM,14 (comparatif 7) par la présence de comonomère polyéther. Il est surprenant de constater qu'il devient alors possible d'obtenir la transparence en le mélangeant avec le PEBA semi-cristallin souples non transparent (exemples 1 à 3), ce qui contraste avec les résultats de transparence obtenus avec les mélanges comparatifs (comp.6 et 6b). Il devient donc ainsi possible de concilier la transparence et les propriétés choc et la tenue en fatigue des PEBA souples.

Il est également surprenant de constater que nos compositions permettent de préserver une haute Tg (exemple 1 à 3 de Tg 95°C, comparé à leur témoin Comparatif 12 de Tg 95°C), contrairement aux mélanges connus (Comparatif 10 de Tg 115°C, comparé à son témoin Comparatif 7 de Tg 141°C). La tenue en température est mieux préservée.

### • Exemples de mélanges ternaires (A)+(B)+(C) selon l'invention :

Les mélanges ternaires permettent certaines optimisations. Il est possible d'améliorer encore plus la tenue chimique par ajout de polyamide semi-cristallin, et l'amélioration des propriétés choc et élastique avec l'ajout de PEBA. Nous avons alors un mélange ternaire. Le **tableau 9** correspond à un mélange ternaire.

Une autre combinaison ternaire avantageuse est l'utilisation conjointe d'un polyamide transparent amorphe et du dit copolymère (A) pour rendre transparent un polyamide semi-cristallin non transparent (ce que peuvent faire les deux ingrédients, le PA transparent amorphe et ledit copolymère A, l'un ou/et l'autre), la composition finale devant avoir une tenue en choc suffisante (ce qu'apporte le dit copolymère (A)) mais sans devenir trop souple (le polyamide amorphe transparent rigide BMACM.14 compensant l'assouplissement dû à la présence du dit copolymère (A)).

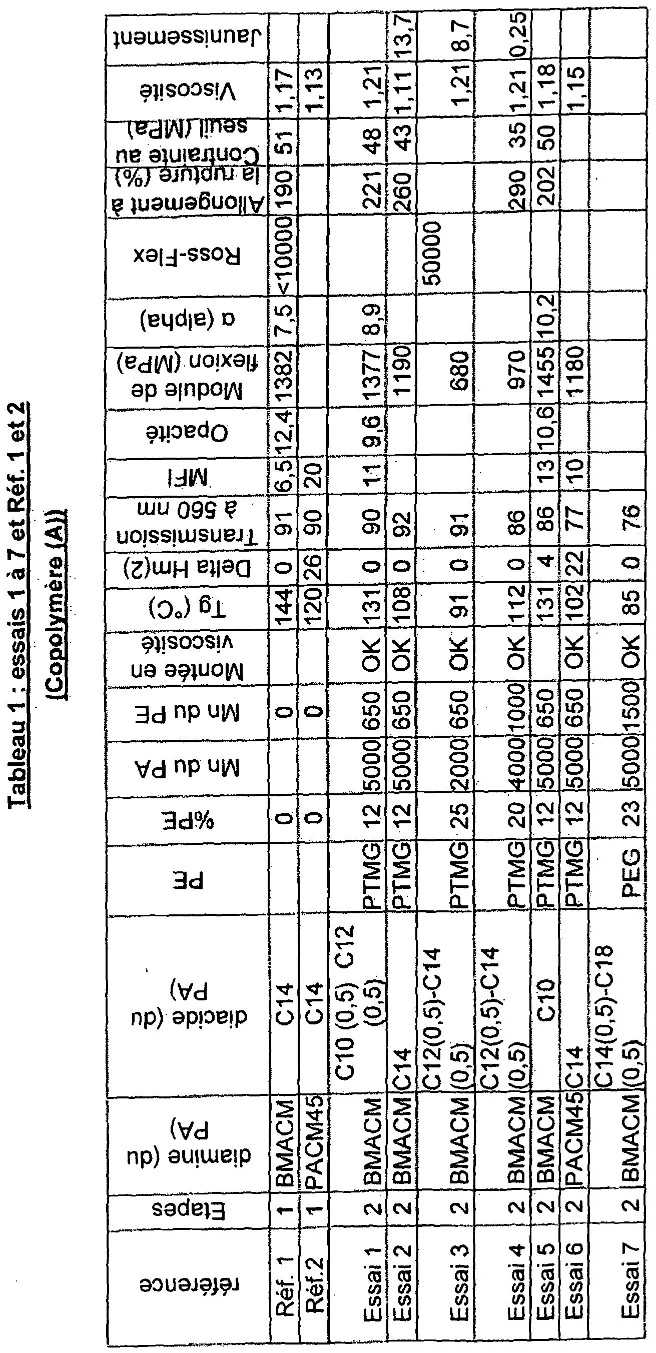

**Tableau 2: Exemples comparatifs 1 à 3, 1b et 1c (Mélanges de PEBA semi-cristallins (Ba))**

| **Composition** | **Comparatif 1b** | **Comparatif 1** | **Comparatif 2** | **Comparatif 3** | **Comparatif 1c** |
|---|---|---|---|---|---|
| A = PA12/PTMG : 5000/650 | 100 | 70 | 50 | 30 | |
| B = PA11/PTMG : 5000/650 | | 30 | 50 | 70 | 100 |
| **Propriétés** | | | | | |
| transparence (560nm, 2 mm) | **23** | **44** | **49** | **49** | **44** |

**Tableau 3 : Exemples comparatifs 4 à 6 et 6b (Mélanges de PA amorphes transparents et de PEBA semi-cristallins (Ba))**

| **Composition** | **comparatif 4** | **comparatif 5** | **comparatif 6** | **comparatif 6b** |
|---|---|---|---|---|
| Réf 1 | 100 | 0 | 70 | 30 |
| PEBA 12/PTMG (2000/1000) | 0 | 100 | 30 | 70 |
| **Propriétés** | | | | |
| Transparence à 560 nm sur 2 mm d'épaisseur | 91 | 39 | 62 | 40 |
| Tenue fatigue Rossflex (cycles) | ≤5000 | >50000 | ≤10000 | |

**Tableau 4 : Exemples comparatifs 7 à 11 (Mélanges de PA amorphes transparents et de PA semi-cristailins)**

| **Composition** | **comparatif 7** | **comparatif 8** | **comparatif 9** | **comparatif 10** | **Comparatif 11** |
|---|---|---|---|---|---|
| Réf 1 ' | 100 | | | 80 | |
| BMACM.AT/BMACM.AI/La12 | | 100 | | | 70 |
| **Propriétés** | | | | | |
| PA12 AESNO | | | 100 | 20 | 30 |
| Tm | sans | sans | 178 | Presque sans (enthalpie <10J/g) | Presque sans (enthalpie <10J/g) |
| Tg | 141 | 170 | 54 | 115 | 120 |
| Transparence à 560 nm sur 2 mm d'épaisseur | 91 | 90 | 10 | 90 | 90 |

**Tableau 5 : Exemples 1 à 3, comparatifs 1b 5 et 12 (Mélanges de (A) et de PEBA semi-cristallins (Ba))**

| **Composition** | **comparatif 12** | **exemple 1** | **exemple 2** | **exemple 3** | **comparatif 5** | **comparatif 1b** |
|---|---|---|---|---|---|---|
| Essai 3 | 100 | 70 | 50 | 30 | 0 | 0 |
| PEBA 12/PTMG 2000/1000 | 0 | 30 | 50 | 70 | 100 | |
| PEBA 12/PTMG 5000/650 | | | | | | 100 |
| **Propriétés** | | | | | | |
| transparence à 560 nm sur 2 mm d'épaisseur | 91 | 88 | 84,5 | 77 | 39 | 44 |
| Tm (par DSC) | sans | 163 | 163 | 163 | 163 | |
| Enthalpie en J/g (reflet de la tenue à chaud) rapportée à la masse de PA12 (par DSC) | 0 | | 60 | 62 | 61 | |
| Tg (reflet de la tenue à chaud) (déterminée par DMA, pic tangente delta) | 95 | 95 | 95 | 95 | | <50 |
| E' à 23°C en MPa (par DMA), souplesse | 690 | 560 | 430 | 350 | 150 | 460 |
| Tenue fatigue Rossflex (cycles) | 20000 | 100000 | 130000 | >150000 | >150000 | 50000 |
| Injectabilité | 151 | 177 | | | | |
| Choc Charpy entaillé ISO179 | casse | Non casse | | | | |

**Tableau 6: Exemples 4 à 6, comparatifs 14 et 15 (Mélanges de (A) et de PA semi-cristallins (Bb))**

| **Composition** | **Comparatif 14** | **exemple 4** | **exemple 5** | **exemple 6** | **Comparatif 15** |
|---|---|---|---|---|---|
| PA11 BESHVO | 100 | 95 | 75 | 30 | |
| Essai 2 | | 5 | 25 | 70 | 100 |
| **Propriétés** | | | | | |
| Transmission à 560 nm sur 2 mm | 44 | 54 | 69 | 81 | 91 |
| ESC Ethanol | | | | 100 | 91 |

**Tableau 7 : Comparatif 1B et Exemple A autres (mélanges de (A) et de PEBA mi-cristallins (Ba))**

| **Composition** | Comparatif 1 B | Exemple A |
|---|---|---|
| PEBA 12/PTMG 5000/650 | 100 | 75 |
| Essai 2 | | 25 |
| **Propriétés** | | |
| Transmission à 560 nm sur 2 mm | 23 | 75 |

**Tableau 8 : exemple 7 (Mélange anti-statique et imper-respirant)**

| **Composition** | **Exemple 7** |
|---|---|
| PEBA12/PEG 4500/1500 | 30 |
| Essai 7 | 70 |
| **Propriétés** | |
| Résistivité superficielle (antistatisme) | 9.10^9 |
| Perméabilité vapeur d'eau (imper-respirabilité) | 7500 |
| Transmission à 560mm | 66 |

**Tableau 9 : Mélange ternaire, exemple 8**

| **Composition** | **Exemple 8** |
|---|---|
| Essai 2 | 50 |
| PEBA 12/PTMG 4000/1000 | 30 |
| PA11 BESHVO | 20 |
| **Propriétés** | |
| Transmission à 560mm | 81 |

**Tableau 10, exemple 9**

| **Composition** | **Exemple 9** |
|---|---|
| Essai 3 | 15 |
| Réf 1 | 15 |
| PA11BESHVO | 70 |
| **Propriétés** | |
| Transmission à 560mm | 71 |

Si l'on souhaite apporter une meilleure résistance au choc et une meilleure résistance chimique au polyamide transparent amorphe (BMACM.14), on peut aussi considérer des compositions illustrées par les exemples suivants. L'essai 2 donnera de la souplesse et du choc tandis que le PACM45.14 apportera grâce à sa cristallinité de la tenue chimique.

**Tableau 11, exemples 10 et 11**

| **Composition** | **Exemple 10** | **Exemple 11** |
|---|---|---|
| Essai 2 | 30 | 30 |
| Réf.1 | 70 | 50 |
| Réf.2 | | 20 |
| **Propriétés** | | |
| Transmission à 560mm | **82** | **75** |

Si par rapport à l'Exemple 3, on souhaite une moindre flexibilité tout en conservant l'essentiel des propriétés d'élasticité (Rossflex), il est préférable de ne pas prendre un PEBA moins souple et donc pauvre en polyéther, mais plutôt de conserver ce même PEBA 2000/1000 souple et riche en polyéther, et de diminuer la souplesse en introduisant un peu de PA amorphe rigide.

**Tableau 12, exemple D**

| **Composition** | **Exemple D** |
|---|---|
| Essai 3 | 30 |
| Réf 1 | 10 |
| PEBA 12/PTMG 2000/1000 | 60 |
| **Propriétés** | |
| Transmission à 560mm | 56 |

A la place du PA amorphe, on peut aussi utiliser un PA semicristallin aliphatique, ce qui aura l'avantage d'améliorer la tenue chimique.

**Tableau 13, Exemples E et F**

| **Composition** | **Exemple E** | **Exemple F** |
|---|---|---|
| Essai 3 | 30 | 30 |
| PA11 BESHVO | 10 | 50 |
| PEBA 12/PTMG 2000/1000 | 60 | 20 |
| **Propriétés** | | |
| Transmission à 560mm | **66** | **55** |

## Revendications

1. Mélange ou alliage transparent comprenant, en poids, le total étant 100 % :
(A) 1 à 99% d'au moins un constituant copolymère :
- présentant une transparence élevée qui est telle que la transmittance à 560 nm sur plaque de 2 mm d'épaisseur est supérieure à 65% ;
- présentant une température de transition vitreuse au moins égale à 75°C ; et
- étant amorphe ou présentant une cristallinité allant jusqu'à la semi-cristallinité ; et
- comportant :
(A1) des motifs amides parmi lesquels se trouve au moins un motif cycloaliphatique ;
(A2) des motifs souples éthers ;
(B) 99 à 1 % d'au moins un constituant polymère choisi parmi :
(Ba) les copolyamides semi-cristallins à motifs amides (Ba1) et à motifs éthers (Ba2), ayant une température de transition vitreuse (T_{g}) inférieure à 65°C ;
(Bb) les polyamides ou copolyamides semi-cristallins sans motifs éthers, ayant une température de fusion (Tm) supérieure à 100°C ;
(Bc) les polyamides ou copolyamides transparents; sans motifs éthers, ayant une température de transition vitreuse (Tg) supérieure à 75°C et étant amorphes ou faiblement cristallins ayant une enthalpie de fusion lors de la deuxième chauffe d'une DSC ISO (delta Hm(2)) inférieure à 25J/g, la masse étant rapportée à la quantité de motifs amides contenus ou de polyamide contenus, cette fusion correspondant à celle des motifs amides ; et
les alliages à base de tels polyamides ou copolyamides ; et
(C) 0 à 50% en poids d'au moins un polyamide, copolyamide, copolyamide à motifs éthers ou alliage à base de tels polyamides ou copolyamides autres que ceux utilisés en (A) et (B) ci-dessus ; et/ou d'au moins un additif choisi parmi les colorants, les stabilisants tels que les stabilisants thermiques et les stabilisants aux UV, les agents de nucléation, les plastifiants, les agents améliorant la résistance aux chocs et les agents de renforcement, ledit ou lesdits additifs ayant, de préférence, un indice de réfraction proche de celui du copolymère (A), (B) ou éventuellement (C) ;
le choix des motifs ou monomères entrant dans la composition de (A), (B) et (C), ainsi que le choix des proportions desdits motifs ou desdits monomères étant tel que le mélange ou alliage résultant présente une transparence élevée telle que la transmittance à 560 nm sur plaque de 2 mm d'épaisseur est supérieure à 50%.

2. Mélange ou alliage selon la revendication 1, **caractérisé par le fait que** le constituant copolymère (A) est amorphe.

3. Mélange ou alliage selon la revendication 1, **caractérisé par le fait que** le constituant copolymère (A) est quasi-amorphe, ayant une cristallinité telle que l'enthalpie de fusion lors de la deuxième chauffe d'une DSC ISO (delta Hm(2)) soit inférieure ou égale à 10 J/g, la masse étant rapportée à la quantité de motifs amides contenus ou de polyamide contenu, cette fusion correspondant à celle des motifs amides.

4. Mélange ou alliage selon la revendication 1, **caractérisé par le fait que** le constituant copolymère (A) a une cristallinité telle que l'enthalpie de fusion lors de la deuxième chauffe d'une DSC ISO (delta Hm(2)) soit comprise entre 10 et 30 J/g, préférentiellement entre 10 et 25 J/g, la masse étant rapportée à la quantité de motifs amides contenus ou de polyamide contenu, cette fusion correspondant à celle des motifs amides.

5. Mélange ou alliage selon l'une des revendications 1 à 4, **caractérisé par le fait que** le constituant copolymère (A) présente une température de transition vitreuse (Tg) au moins égale à 90°C.

6. Mélange ou alliage selon l'une des revendications 1 à 4, **caractérisé par le fait que** le constituant copolymère (A) présente une transparence qui est telle que la transmittance à 560 nm sur plaque de 2mm d'épaisseur est supérieure à 75 %.

7. Mélange ou alliage selon l'une des revendications 1 à 6, **caractérisé par le fait que** le constituant copolymère (A) à motifs amides (A1) et à motifs éthers (A2) se présente sous forme de blocs polyamide-polyéther.

8. Mélange ou alliage selon l'une des revendications 1 à 7, **caractérisé par le fait que** les motifs amides (A1) sont constitués majoritairement d'une association équimolaire d'au moins une diamine et d'au moins un diacide carboxylique, la ou les diamines étant majoritairement cycloaliphatiques et le ou les diacides carboxyliques étant majoritairement aliphatiques linéaires, les motifs amides pouvant éventuellement comprendre, mais de façon minoritaire, au moins un autre comonomère de polyamide.

9. Mélange ou alliage selon la revendication 8, **caractérisé par le fait que** la ou les diamines cycloaliphatiques sont choisies parmi le bis-(3-méthyl-4-aminocyclohexyl)-méthane (BMACM), le para-aminodicyclohexylméthane (PACM), l'isophoronediamine (IPD), le bis(4-aminocyclohexyl)-méthane (BACM), le 2,2-bis(3-méthyl-4-aminocyclohexyl)propane (BMACP), la 2,6-bis(aminométhyl)norbornane (BAMN).

10. Mélange ou alliage selon la revendication 9, **caractérisé par le fait qu'**une seule diamine cycloaliphatique, en particulier le bis-(3-méthyl-4-aminocyclohexyl)-méthane, a été utilisée comme diamine pour l'obtention des motifs amides (A1).

11. Mélange ou alliage selon l'une des revendications 9 et 10, **caractérisé par le fait qu'**au moins une diamine non cycloaliphatique est entrée dans la composition des monomères des motifs amides (A1) à raison d'au plus 30% en moles par rapport aux diamines de ladite composition, ladite diamine non cycloaliphatique étant notamment une diamine aliphatique linéaire, telle que la 1,4-tétraméthylène diamine, la 1,6-hexaméthylènediamine, la 1,9-nonaméthylènediamine et la 1,10-décaméthylènediamine.

12. Mélange ou alliage selon l'une des revendications 8 à 11, **caractérisé par le fait que** le ou les diacides carboxyliques aliphatiques sont choisis parmi les diacides carboxyliques aliphatiques ayant de 6 à 36 atomes de carbone, de préférence de 9 à 18 atomes de carbone, en particulier l'acide 1,10-décanedicarboxylique, l'acide 1,12-dodécanedicarboxylique, l'acide 1,14-tétradécanedicarboxylique et l'acide 1,18-octanedécanedicarboxylique.

13. Mélange ou alliage selon l'une des revendications 8 à 12, **caractérisé par le fait qu'**au moins un diacide carboxylique non aliphatique est entré dans la composition des monomères des motifs amides à raison d'au plus 15% en moles par rapport aux diacides carboxyliques de ladite composition.

14. Mélange ou alliage selon la revendication 13, **caractérisé par le fait que** le diacide carboxylique non aliphatique est choisi parmi les diacides aromatiques, en particulier l'acide isophtalique (I), l'acide téréphtalique (T) et leurs mélanges.

15. Mélange ou alliage selon l'une des revendications 8 à 14, **caractérisé par le fait que** le ou les monomères entrant de façon minoritaire dans la composition des monomères des motifs amides (A1) sont choisis parmi les lactames et les acides alpha-oméga aminocarboxyliques.

16. Mélange ou alliage selon la revendication 15, **caractérisé par le fait que** le ou les lactames sont choisis parmi les lactames ayant au moins 6 carbones, en particulier le caprolactame, l'oenantholactame et le lauryllactame.

17. Mélange ou alliage selon la revendication 15, **caractérisé par le fait que** le ou les acides alpha-oméga aminocarboxyliques sont choisis parmi ceux ayant au moins 6 carbones, en particulier l'acide aminocaproïque, l'acide amino-7-heptanoïque, l'acide amino-11-undécanoïque et l'acide amino-12-dodécanoïque.

18. Mélange ou alliage selon l'une des revendications 1 à 17, **caractérisé par le fait que** le constituant copolymère (A) compte des motifs amides (A1) dont le nombre de carbones par amide est en moyenne au moins égal à 9.

19. Mélange ou alliage selon l'une des revendications 7 à 18, **caractérisé par le fait que** les blocs polyamides du constituant polymère (A) sont choisis parmi BMACM,6, BMACM,9, BMACM,10, BMACM,12, BMACM,14, BMACM,16, BMACM,18 et leurs mélanges ou copolymères.

20. Mélange ou alliage selon l'une des revendications 7 à 19, **caractérisé par le fait que** la masse moléculaire moyenne en nombre des blocs polyamides est comprise entre 500 et 12000 g/mole, de préférence entre 2000 et 6000 g/mole.

21. Mélange ou alliage selon l'une des revendications 1 à 20, **caractérisé par le fait que** les motifs éthers (A2) sont issus d'au moins un polyalkylène éther polyol, notamment un polyalkylène éther diol.

22. Mélange ou alliage selon la revendication 21, **caractérisé par le fait que** le polyalkylène éther diol est choisi parmi le polyéthylène glycol (PEG), le polypropylène glycol (PPG), le polytriméthylène glycol (PO3G), le polytétraméthylène glycol (PTMG) et leurs mélanges ou leurs copolymères.

23. Mélange ou alliage selon l'une des revendications 7 à 22, **caractérisé par le fait que** les blocs souples polyéthers comprennent des séquences polyalkylène à bouts de chaînes NH₂.

24. Mélange ou alliage selon l'une des revendications 7 à 23, **caractérisé par le fait que** la masse moléculaire moyenne en nombre des blocs polyéthers est comprise entre 200 et 4000 g/mole, de préférence entre 300 et 1100 g/mole.

25. Mélange ou alliage selon l'une des revendications 1 à 24, **caractérisé par le fait que** le constituant polymère (B) est choisi parmi les copolyamides (Ba).

26. Mélange ou alliage selon la revendication 25, **caractérisé par le fait que** les copolyamides (Ba) sont choisis parmi ceux ayant une température de fusion supérieure à 100°C, de préférence supérieure à 150°C, et une température de transition vitreuse (Tg) inférieure à 65°C, et comportant :
(Ba1) des motifs amides aliphatiques ou majoritairement aliphatiques ;
(Ba2) des motifs éthers.

27. Mélange ou alliage selon la revendication 26, **caractérisé par le fait que** le copolyamide (Ba) à motifs amides (Ba1) et à motifs éthers (Ba2) se présente sous forme de blocs polyamide-polyéther.

28. Mélange ou alliage selon l'une des revendications 25 à 27, **caractérisé par le fait que** les motifs amides (Ba1) sont constitués majoritairement d'un lactame ou d'un acide alpha, oméga-amino carboxylique, et/ou d'une association équimolaire d'au moins une diamine et d'au moins un diacide carboxylique, la ou les diamines étant majoritairement aliphatiques linéaires, les motifs amides pouvant éventuellement comprendre, mais de façon minoritaire, au moins un autre comonomère de polyamide.

29. Mélange ou alliage selon l'une des revendications 25 à 28, **caractérisé par le fait que** le constituant copolymère (B) compte des motifs amides (Ba1) de nature aliphatique linéaire dont le nombre de carbones par amide est en moyenne au moins égal à 9.

30. Mélange ou alliage selon l'une des revendications 27 à 29, **caractérisé par le fait que** les blocs polyamides aliphatiques linéaires sont choisis parmi le PA 12, le PA 11, le PA 10.10, le PA 10.12, le PA 10.14, le PA 6.10, le PA 6.12, le PA 6.14 et le PA 6.18, étant choisis en particulier parmi le PA 10.10, le PA 10.12, le PA 10.14, le PA 6.10, le PA 6.12, le PA 6.14 et le PA 6.18.

31. Mélange ou alliage selon l'une des revendications 26 à 30, **caractérisé par le fait que** les motifs éthers (Ba2) sont choisis parmi ceux indiqués pour les motifs éthers (A2) à l'une des revendications 21 à 24, étant avantageusement de même nature et de taille ou masse voisine que les motifs éthers (A2) dudit mélange ou alliage.

32. Mélange ou alliage selon l'une des revendications 25 à 30, **caractérisé par le fait que** le copolyamide (Ba) a une cristallinité telle que l'enthalpie de fusion lors de la deuxième chauffe d'une DSC ISO (delta Hm(2)) soit au moins égale à 25 J/g, la masse étant rapportée à la quantité de motifs amides contenus ou de polyamide contenu, cette fusion correspondant à celle des motifs amides.

33. Mélange ou alliage selon l'une des revendications 1 à 32, **caractérisé par le fait que** les motifs amides (A1) représentent au moins 50% en poids dudit constituant copolymère (A), et que les motifs amides (Ba1) représentent au moins 50% en poids du copolyamide (Ba)

34. Mélange ou alliage selon l'une des revendications 1 à 33;
**caractérisé par le fait que** les motifs éthers (A2) représentent au moins 15% en poids dudit constituant copolymère (A), et que les motifs éthers (Ba2) représentent au moins 15% en poids du copolyamide (Ba).

35. Mélange ou alliage selon l'une des revendications 1 à 34, **caractérisé par le fait que** les polyamides et copolyamides semi-cristallins (Bb) ont une température de fusion (Tm) supérieure à 150 °C.

36. Mélange ou alliage selon l'une des revendications 1 à 35, **caractérisé par le fait que** les polyamides semi-cristallins (Bb) sont choisis parmi le PA12, le PA11, le PA10.10, le PA10.12, le PA10.14, le PA 6.10, le PA6.12, le PA6.14 et le PA6.18.

37. Mélange ou alliage selon l'une des revendications 1 à 36, **caractérisé par le fait que** les polyamides transparents (Bc) sont choisis parmi les polyamides à base de diamines BMACM, PACM, IPD et de diacide carboxylique en C14, C12, C10, leurs copolymères ou mélanges.

38. Mélange ou alliage selon l'une des revendications 1 à 37, **caractérisé par le fait que** le constituant polymère (B) est essentiellement constitué de:
- polyamides ou copolyamides amorphes transparents et polyamides ou copolyamides semi-cristallins, en particulier alliages de polyamides BMACM.12, PACM.12, IPD.12 ou de leurs copolyamides avec le PA12 ;
- polyamides ou copolyamides amorphes transparents et copolyamides semi-cristallins avec des motifs éthers ;
- polyamides ou copolyamides semi-cristallins et copolyamides semi-cristallins avec des motifs éthers .

39. Mélange ou alliage selon l'une des revendications 1 à 38, **caractérisé par le fait que** la nature et les proportions de (A) et de (B) et, le cas échéant d'un constituant polymère de (C) sont telles que la composition résultante est amorphe et a une température de transition vitreuse supérieure à 75°C.

40. Mélange ou alliage selon l'une des revendications 1 à 38, **caractérisé par le fait que** la nature et les proportions de (A) et de (B) et, le cas échéant d'un constituant polymère de (C), sont telles que la composition résultante est semi-cristalline, de point de fusion Tm supérieur à 100°C, de préférence supérieur à 150°C, et d'enthalpie de fusion lors de la deuxième chauffe d'une DSC ISO (delta Hm(2)) supérieure à 10J/g, préférentiellement à 25J/g, la masse étant rapportée à la quantité de motifs amides contenu ou de polyamide contenu, cette fusion correspondant à celle des motifs amides, afin de garantir une cristallinité suffisante pour rester à l'état suffisamment solide au-delà de la température de transition vitreuse (Tg) et ne se liquéfier qu'au-delà de son point de fusion Tm.

41. Mélange ou alliage selon l'une des revendications 1 à 39, **caractérisé par le fait que** le choix des motifs ou monomères entrant dans la composition de (A), (B) et (C), ainsi que le choix des proportions desdits motifs ou desdits monomères sont tels que le mélange ou alliage résultant présente une transparence élevée telle que la transmittance à 560 nm sur plaque de 2 mm d'épaisseur est supérieure à 75%.

42. Mélange ou alliage selon l'une des revendications 1 à 41, **caractérisé par le fait que**, dans (A) ou (Ba), préférentiellement dans (A) et (Ba), les motifs souples éthers sont choisis de nature très hydrophile, de préférence de nature bloc polyéther de type PEG ou ses copolymères avec du PPG ou du PO3G, ce qui confère des propriétés antistatiques et imper-respirantes c'est-à-dire permettant le passage de la vapeur d'eau, mais non de l'eau liquide, audit mélange ou alliage, ce mélange ou alliage pouvant être de surcroît additivé par des additifs antistatiques tiers afin de renforcer l'effet antistatique global, et par des additifs permettant d'accroître la compatibilité de mélange avec d'autres polymères, le mélange ou alliage, seul ou ainsi additivé, pouvant en effet être ensuite utilisé en tant qu'additif d'un autre polymère ou matériau afin de lui conférer un surcroît de propriétés antistatique ou imper-respirantes.

43. Mélange ou alliage selon la revendication 42, **caractérisé par le fait que** le mélange ou alliage additivé est transparent, les ingrédients dudit mélange ou alliage sont choisis de telle sorte que l'indice de réfraction de celui-ci soit très proche de celui du polymère ou matériau à additiver.

44. Procédé de fabrication d'un mélange ou alliage tel que défini à l'une des revendications 1 à 43, **caractérisé par le fait que** l'on mélange les constituants (A), (B) et le cas échéant (C) qui sont sous forme de granulés, ce mélange étant ensuite injecté à une température comprise entre 230 et 330°C sur une presse à injection pour obtenir les objets et éprouvettes désirés.

45. Procédé de fabrication d'un mélangé ou alliage tel que défini à l'une des revendications 1 à 43, **caractérisé par le fait que** l'on mélange les constituants (A), (B) et le cas échéant (C) à l'état fondu, en particulier dans une extrudeuse, à une température comprise entre 230 et 330°C, et on les récupère sous forme de granulés, granulés qui seront par la suite injectés à une température comprise entre 230 et 330°C, sur une presse à injection pour obtenir les objets et éprouvettes désirés.

46. Procédé de fabrication d'un mélange ou alliage selon la revendication 45, ledit mélange ou alliage comprenant des additifs au constituant (Ba), **caractérisé par le fait que**
- dans une première étape, on mélange le constituant (Ba) à l'état fondu avec lesdits additifs, en particulier sur une extrudeuse, la composition étant alors récupérée sous forme de granulés ;
- dans une deuxième étape, on mélange la composition obtenue à la première étape à des granulés du constituant polymère (A).

47. Article façonné, tel que fibre, tissu, film, feuille, jonc, tube pièce injectée, notamment transparent ou translucide, comprenant le mélange ou alliage tel que défini à l'une des revendications 1 à 43, lequel peut être réalisé sous la forme d'un mélange à sec ou après un compoundage sur extrudeuse.

48. Article selon la revendication 39, **caractérisé par le fait qu'**il consiste en un article ou élément d'article de sport, tel qu'un élément de chaussure de sport, un ustensile de sport tel que patins à glace, fixations de
skis, raquettes, battes de sport, planches, fers à cheval, palmes, balles de golf, en un article de loisirs, de bricolage, en un outil ou équipement de voirie soumis aux agressions climatiques et mécaniques, en un article de protection, tel que visières de casques, lunettes, branches de lunettes, en un élément de voiture, tel que protège-phare, rétroviseur, petite pièce de voitures tout terrain, réservoirs, en particulier, de cyclomoteurs, motos, scooters.

## Claims

1. Transparent blend or alloy comprising, by weight, the total being 100% :
(A) 1 to 99% of at least one constituent copolymer:
- exhibiting a high transparency which is such that the transmission at 560 nm through a sheet with a thickness of 2 mm is greater than 65%;
- exhibiting a glass transition temperature of at least 75°C; and
- being amorphous or exhibiting a crystallinity ranging up to semicrystallinity; and
- comprising,
(A1) amide units, including at least one cycloaliphatic unit;
(A2) flexible ether units;
(B) 99 to 1% of at least one constituent polymer chosen from:
(Ba) semicrystalline copolyamides comprising amide units (Ba1) and comprising ether units (Ba2) having a glass transition temperature (Tg) of less than 65°C;
(Bb) semicrystalline polyamides or copolyamides without ether units having a melting point (M.p.) of greater than 100°C;
(Bc) transparent polyamides or copolyamides without ether units having a glass transition temperature (Tg) of greater than 75°C and being amorphous or weakly crystalline having an enthalpy of fusion during the second heating of an ISO DSC (delta Hm(2)) of less than 25 J/g, the weight being with respect to the amount of amide units present or of
polyamide present, this melting corresponding to that of the amide units;
and
alloys on such polyamides or copolyamides; and
(C) 0 to 50% by weight of at least one polyamide, copolyamide, copolyamide comprising ether units or alloy based on such polyamides or copolyamides other than those used in (A) and (B) above; and/or of at least one additive chosen from colorants, stabilizers, such as heat stabilizers and UV stabilizers, nucleating agents, plasticizers, agents for improving the impact strength and reinforcing agents, the said additive or additives preferably having a refractive index similar to that of the copolymer (A), (B) or optionally (C);
the choice of the units or monomers participating in the composition of (A), (B) and (C) and also the choice of the proportions of the said units or of the said monomers being such that the resulting blend or alloy exhibits a high transparency such that the transmission at 560 nm through a sheet with a thickness of 2 mm is greater than 50%.

2. Blend or alloy according to Claim 1, **characterized in that** the constituent copolymer (A) is amorphous.

3. Blend or alloy according to Claim 1, **characterized in that** the constituent copolymer (A) is quasiamorphous, having a crystallinity such that the enthalpy of fusion during the second heating of an ISO DSC (delta Hm(2)) is less than or equal to 10 J/g, the weight being with respect to the amount of amide units present or of polyamide present, this melting corresponding to that of the amide units.

4. Blend or alloy according to Claim 1, **characterized in that** the constituent copolymer (A) has a crystallinity such that the enthalpy of fusion during the second heating of an ISO DSC (delta Hm(2)) is between 10 and 30 J/g, preferably between 10 and 25 J/g, the weight being with respect to the amount of amide units present or of polyamide present, this melting corresponding to that of the amide units.

5. Blend or alloy according to one of Claims 1 to 4, **characterized in that** the constituent copolymer (A) exhibits a glass transition temperature (Tg) at least equal to 90°C.

6. Blend or alloy according to one of Claims 1 to 4, **characterized in that** the constituent copolymer (A) exhibits a transparency which is such that the transmission at 560 nm through a sheet with a thickness of 2 mm is greater than 75%.

7. Blend or alloy according to one of Claims 1 to 6, **characterized in that** the constituent copolymer (A) comprising amide units (A1) and comprising ether units (A2) is provided in the of polyamide-polyether blocks.

8. Blend or alloy according to one of Claims 1 to 7, **characterized in that** the amide units (A1) are composed predominantly of an equimolar combination of at least one diamine and of at least one dicarboxylic acid, the diamine or diamines being predominantly cycloaliphatic and the dicarboxylic acid or acids being predominantly linear aliphatic, it being possible for the amide units optionally to comprise, but to a minor extent, at least one other polyamide comonomer.

9. Blend or alloy according to Claim 8, **characterized in that** the cycloaliphatic diamine or diamines are chosen from bis(3-methyl-4-aminocyclohexyl)methane (BMACM), para-aminodicyclohexylmethane (PACM), isophoronediamine (IPD), bis(4-aminocyclohexyl)methane (BACM), 2,2-bis(3-methyl-4-aminocydohexyl)propane (BMACP) or 2,6-bis(aminomethyl)-norbornane (BAMN).

10. Blend or alloy according to Claim 9, **characterized in that** just one cycloaliphatic diamine, in particular bis(3-methyl-4-aminocyciohexyl)-methane, was used as diamine to produce the amide units (A1).

11. Blend or alloy according to either of Claims 9 and 10, **characterized in that** at least one noncycloaliphatic diamine participates in the composition of the monomers of the amide units (A1) in a proportion of at most 30 mol% with respect to the diamines of the said composition, the said noncycloaliphatic diamine being in particular a linear aliphatic diamine, such as 1,4-tetramethylenediamine, 1,6-hexamethylenediamine, 1,9-nonamethylenediamine and 1,10-decamethylenediamine,

12. Blend or alloy according to one of Claims 8 to 11, **characterized in that** the aliphatic dicarboxylic acid or acids are chosen from aliphatic dicarboxylic acids having from 6 to 36 carbon atoms, preferably from 9 to 18 carbon atoms, in particular 1,10-decanedicarboxylic acid, 1,12-dodecanedicarboxylic acid, 1,14-tetradecanedicarboxylic acid and 1,18-octadecanedicarboxylic acid.

13. Blend or alloy according to one of Claims 8 to 12, **characterized in that** at least one nonaliphatic dicarboxylic acid participates in the composition of the monomers of the amide units in a proportion of at most 15 mol% with respect to the dicarboxylic acids of the said composition.

14. Blend or alloy according to Claims 13, **characterized in that** the nonaliphatic dicarboxylic acid is chosen from aromatic diacids, in particular isophthalic acid (I), terephthalic acid (T) and their mixtures.

15. Blend or alloy according to one of Claims 8 to 14, **characterized in that** the monomer or monomers participating to a minor extent in the composition of the monomers of the amide units (A1) are chosen from lactams and α,ω-aminocarboxylic acids.

16. Blend or alloy according to Claim 15, **characterized in that** the lactam or lactams are chosen from lactams having at least 6 carbons, in particular caprolactam, oenantholactam or lauryllactam.

17. Blend or alloy according to Claims 15, **characterized in that** the α,ω-aminocarboxylic acid or acids are chosen from those having at least 6 carbons, in particular aminocaproic acid, 7-aminoheptanoic acid, 11-aminoundecanoic acid and 12-aminododecanoic acid.

18. Blend or alloy according to one of Claims 1 to 17, **characterized in that** the constituent copolymer (A) includes amide units (A1) for which the number of carbons per amide is on average at least equal to 9.

19. Blend or alloy according to of Claims 7 to 18, **characterized in that** the polyamide blocks of the constituent polymer (A) are chosen from BMACM.6, BMACM.9, BMACM.10, BMACM.12, BMACM.14, BMACM.16, BMACM.18 and their blends or copolymers.

20. Blend or alloy according to one of Claims 7 to 19, **characterized in that** the number-average molecular weight of the polyamide blocks is between 500 and 12 000 g/mol, preferably between 2000 and 6000 g/mol.

21. Blend or alloy according to one of Claims 1 to 20, **characterized in that** the ether units (A2) result from at least one polyalkylene ether polyol, in particular a polyalkylene ether diol.

22. Blend or alloy according to Claim 21, **characterized in that** the polyalkylene ether diol is chosen from polyethylene glycol (PEG), polypropylene glycol (PPG), polytrimethylene glycol (PO3G), polytetramethylene glycol (PTMG) and their blends or their copolymers.

23. Blend or alloy according to one of Claims 7 to 22, **characterized in that** the flexible polyether blocks comprise polyoxyalkylene sequences comprising NH₂ chain ends.

24. Blend or alloy according to one of Claims 7 to 23, **characterized in that** the number-average molecular weight of the polyether blocks is is between 200 and 4000 g/mol, preferably between 300 and 1100g/mol.

25. Blend or alloy according to one of Claims 1 to 24, **characterized in that** the constituent polymer (B) is chosen from copolyamides (Ba).

26. Blend or alloy according to Claim 25, **characterized in that** the copolyamides (Ba) are chosen from those having a melting point of greater than 100°C, preferably greater than 150°C, and a glass transition temperature (Tg) of less than 65°C and comprising:
(Ba1) aliphatic or predominantly aliphatic amide units;
(Ba2) ether units.

27. Blend or alloy according to Claim 26, **characterized in that** the copolyamide (Ba) comprising amide units (Ba1) and comprising ether units (Ba2) is provided in the form of polyamide-polyether blocks.

28. Blend or alloy according to of Claims 25 to 27, **characterized in that** the amide units (Ba1) are composed predominantly of a lactam or of an α,ω-aminocarboxylic acid and/or of an equimolar combination of at least one diamine and of at least one dicarboxylic acid, the diamine or diamines being predominantly linear aliphatic diamines, it it being possible for the amide units optionally to comprise, but to a minor extent, at least one other polyamide comonomer.

29. Blend or alloy according to one of Claims 25 to 28, **characterized in that** the constituent copolymer (B) includes amide units (Ba1) of linear aliphatic nature for which the number of carbons per amide is on average at least equal to 9.

30. Blend or alloy according to one of Claims 27 to 29, **characterized in that** the linear aliphatic polyamide blocks are chosen from PA 12, PA 11, PA 10.10, PA 10.12, PA 10.14, PA 6.10, PA 6.12, PA 6.14 and PA 6.18, being chosen in from PA 10.10, PA 10.12, PA 10.14, PA 6.10, PA 6.12, PA 6.14 and PA 6.18.

31. Blend or alloy according to one of Claims 26 to 30, **characterized in that** the ether units (Ba2) are chosen from those indicated for the ether units (A2) in one of Claims 21 to 24, advantageously being of the same nature and of a similar size or weight as the ether units (A2) of the said blend or alloy.

32. Blend or alloy according to one of Claims 25 to 30, **characterized in that** the copolyamide (Ba) has a crystallinity such that the enthalpy of fusion during the second heating of an ISO DSC (delta Hm(2)) is at least equal to 25 J/g, the weight being with respect to the amount of amide units present or of polyamide present, this melting corresponding to that of the amide units.

33. Blend or alloy according to one of Claims 1 to 32, **characterized in that** the amide units (A1) represent at least 50% by weight of the said constituent copolymer (A) and **in that** the amide units (Ba1) represent at least 50% by weight of the copolyamide (Ba).

34. Blend or alloy according to one of Claims 1 to 33, **characterized in that** the ether units (A2) represent at least 15% by weight of the said constituent copolymer (A) and **in that** the ether units (Ba2) represent at least 15% by weight of the copolyamide (Ba).

35. Blend or alloy according to one of Claims 1 to 34, **characterized in that** the semicrystalline polyamides and copolyamides (Bb) have a melting point (M.p.) of greater than 150°C.

36. blend or alloy according to one of Claims 1 to 35, **characterized in that** the semicrystalline polyamides (Bb) are are chosen from PA12, PA11, Pea10.10, PA10.12, PA10.14, PA 6.10, PA6.12, PA6.14 and Pea6.18.

37. Blend or alloy according to one of Claims 1 to 36, **characterized in that** the transparent polyamides (Bc) are chosen from polyamides based on diamines BMACM, PACM, IPD and on C14, C12, C10 dicarboxylic acid, their copolymers or blends.

38. Blend or alloy according to one of Claims 1 to 37, **characterized in that** the constituent polymer (B) is composed essentially of:
- transparent amorphous polyamides or copolyamides and semicrystalline polyamides or copolyamides, in particular alloys of polyamides BMACM.12, PACM.12, IPD.12 or of their copolyamides with PA12 :
- transparent amorphous polyamides or copolyamides and semicrystalline copolyamides with ether units;
- semicrystalline polyamides or copolyamides and semicrystalline copolyamides with ether units.

39. Blend or alloy according to one of Claims 1 to 38, **characterized in that** the nature and the proportions of (A) and of (B) and, if appropriate, of a constituent polymer of (C) are such that the resulting composition is amorphous and has a glass transition temperature of greater than 75°C.

40. Blend or alloy according to one of Claims 1 to 38, **characterized in that** the and the proportions of (A) and (B) and, if appropriate, of a constituent polymer of (C) are such that the resulting composition is semicrystalline, with a melting point M.p. of greater than 100°C, preferably of greater than 150°C, and with an enthalpy of fusion during the second heating of an ISO DSC (delta Hm(2)) of greater than 10 J/g, preferably than 25 J/g, the weight being with respect to the amount of amide units present or of polyamide present, this melting corresponding to that of the amide units, in order to guarantee sufficient crystallinity to remain in a sufficiently solid state above the glass transition temperature (Tg) and to liquefy only above its melting point M.p.

41. Blend or alloy according to one of Claims 1 to 39, **characterized in that** the choice of the units or monomers participating in the composition of (A), (B) and (C) as well as the choice of the proportions of the said units or of the said monomers are such that the resulting blend or alloy exhibits a high transparency such that the transmission at 560 nm through a sheet with a thickness of 2 mm is greater than 75%.

42. Blend or alloy according to one of Claims 1 to 41, **characterized in that**, in (A) or (Ba), preferably in (A) and (Ba), the flexible ether units are chosen to be of highly hydrophilic nature, preferably of polyether block of PEG or its copolymers with PPG or PO3G type nature, which confers antistatic properties and waterproof-breathable properties, that is to say allowing the passage of water vapour but not of liquid water, on the said blend or alloy, it furthermore being possible for this blend or alloy to be additivated by third-party antistatic additives, in order to reinforce the overall antistatic effect, and by additives which make it possible to increase the blending compatibility with other polymers, it being possible for the blend or alloy, alone or thus additivated, subsequently to be specifically as additive of another polymer or material in order to confer on it an increase in antistatic or waterproof-breathable properties.

43. blend or alloy according to Claim 42, **characterized in that** the additivated blend or alloy is transparent, the ingredients of the said blend or alloy being chosen so that the refractive index of the latter is very close to that of the polymer or material to be additivated.

44. Process for the manufacture of a blend or alloy as defined in one of Claims 1 to 43, **characterized in that** the constituents (A), (B) and if appropriate (C), which are in the form of granules, are blended, this blend subsequently being injection moulded at a temperature of between 230 and 330°C on an injection-moulding machine in order to obtain the desired objects and test specimens.

45. Process for the manufacture of a blend or alloy as defined in one of Claims 1 to 43, **characterized in that** the constituents (A), (B) and if appropriate (C) are blended in the molten state, in particular in an extruder, at a temperature of between 230 and 330°C, and they are recovered in the form of granules, which granules will subsequently be injection moulded at a temperature of between 230 and 330°C on an injection-moulding machine it order to obtain the desired objects and test specimens.

46. Process for the manufacture of a blend or alloy according to Claim 45, the said blend or alloy comprising additives the constituent (Ba), **characterized in that**
- in a first stage, the constituent (Ba) is blended in the molten state with the said additives, in particular in an extruder, the composition then being recovered in the form of granules;
- in a second stage, the composition obtained in the first stage is blended with granules of the constituent polymer (A).

47. Shaped article, in particular transparent or translucent shaped article, such as fibre, fabric, film, sheet, rod, pipe or injection-moulded component, comprising the blend or alloy as defined in one of Claims 1 to 43, which can be produced in the form of a dry blend or a compounding in an extruder.

48. Article according to Claim 47, **characterized in that** it consists of an item of sports equipment or a component of an item of sports equipment, such as a component of a sports shoe, an item of sports gear, such as ice skates, ski bindings, rackets, sports bats, boards, horseshoes, flippers or golf balls, of a recreational or do-it-yourself article, of an item of highway gear or equipment subjected to attacks by the weather and to mechanical assaults, of a protective article, such as helmet visors, glasses or sides of glasses, of a motor vehicle component, such as headlight protector, rearview mirror, small component of all-terrain motor vehicles, or tanks, in particular of mopeds, motorbikes or scooters.

## Patentansprüche

1. Transparentes Gemisch oder transparente Legierung, umfassend, auf das Gewicht bezogen, wobei die Summe insgesamt 100% ergibt:
(A) 1 bis 99% mindestens eines Copolymerbestandteils:
- welcher eine hohe Transparenz aufweist, die so ist, dass die Durchlässigkeit bei 560 nm an einer Platte von 2 mm Dicke größer als 65% ist;
- welcher eine Glasübergangstemperatur von zumindest 75°C aufweist; und
- der amorph ist oder eine Kristallinität aufweist, die bis zur Teilkristallinität reicht; und
- welcher enthält:
(A1) Amideinheiten, unter denen sich mindestens eine cycloaliphatische Einheit befindet;
(A2) weiche Ethereinheiten;
(B) 99 bis 1% mindestens eines Polymerbestandteils, der ausgewählt ist unter:
(Ba) teilkristallinen Copolyamiden mit Amideinheiten (Ba1) und Ethereinheiten (Ba2), welche eine Glasübergangstemperatur (T_{g}) unter 65°C aufweisen;
(Bb) teilkristallinen Polyamiden oder Copolyamiden ohne Ethereinheiten, die eine Schmelztemperatur (Tm) über 100°C aufweisen;
(Bc) transparenten Polyamiden oder Copolyamiden ohne Ethereinheiten, die eine Glasübergangstemperatur (T_{g}) über 75°C aufweisen und amorph oder schwach kristallin sind, die eine Schmelzenthalpie während des zweiten Aufheizens einer ISO DSC (delta Hm(2)) unter 25 J/g aufweisen, wobei sich die Masse auf den Anteil der enthaltenen Amideinheiten oder des enthaltenen Polyamids bezieht und wobei das Schmelzen dem der Amideinheiten entspricht, und
Legierungen auf der Basis solcher Polyamide oder Copolyamide; und
(C) 0 bis 50 Gew.-% mindestens eines Polyamids, Copolyamids, Copolyamids mit Ethereinheiten oder einer Legierung auf der Basis solcher Polyamide oder Copolyamide, welche sich von denen für (A) und (B) oben verwendeten unterscheiden; und/oder mindestens eines Zusatzstoffes, der unter den Farbmitteln, Stabilisatoren, wie thermischen Stabilisatoren und UV-Stabilisatoren, Nucleationsmitteln, Weichmachern, die Schlagfestigkeit verbessernden Stoffen und Verstärkungsmitteln ausgewählt sind, wobei der Zusatzstoff oder die Zusatzstoffe vorzugsweise einen Brechungsindex in der Nähe des Brechungsindex des Copolymers (A), (B) oder gegebenenfalls (C) aufweisen;
wobei die Wahl der Einheiten oder Monomere, die in der Zusammensetzung von (A), (B) und (C) enthalten sind, sowie die Wahl der Mengenanteile dieser Einheiten oder Monomere so ist, dass das resultierende Gemisch oder die resultierende Legierung eine hohe Transparenz aufweist, die so ist, dass die Durchlässigkeit bei 560 nm an einer Platte von 2 mm Dicke mehr als 50% beträgt.

2. Gemisch oder Legierung nach Anspruch 1, **dadurch gekennzeichnet, dass** der Copolymerbestandteil (A) amorph ist.

3. Gemisch oder Legierung nach Anspruch 1, **dadurch gekennzeichnet**, des Copolymerbestandteil (A) quasi-amorph ist und eine solche Kristallinität aufweist, dass die Schmelzenthalpie beim zweiten Aufheizen einer ISO DSC (delta Hm(2)) kleiner oder gleich 10 J/g ist, wobei sich die Masse auf den Anteil der enthaltenen Amideinheiten oder des enthaltenen Polyamids bezieht und wobei das Schmelzen dem der Amideinheiten entspricht.

4. Gemisch oder Legierung nach Anspruch 1, **dadurch gekennzeichnet**, des Copolymerbestandteil (A) eine solche Kristallinität aufweist, dass die Schmelzenthalpie beim zweiten Aufheizen einer ISO DSC (delta Hm(2)) im Bereich von 10 bis 30 J/g, vorzugsweise im Bereich von 10 bis 25 J/g liegt, wobei sich die Masse auf den Anteil der enthaltenen Amideinheiten oder des enthaltenen Polyamids bezieht und wobei das Schmelzen dem der Amideinheiten entspricht.

5. Gemisch oder Legierung nach einem der Ansprüche 1 bis 4, **dadurch gekennzeichnet, dass** der Copolymerbestandteil (A) eine Glasübergangstemperatur (Tg) von zumindest 90°C aufweist.

6. Gemisch oder Legierung nach einem der Ansprüche 1 bis 4, **dadurch gekennzeichnet, dass** der Copolymerbestandteil (A) eine solche Transparenz aufweist, dass die Durchlässigkeit bei 560 nm an einer Platte von 2 mm Dicke über 75% liegt.

7. Gemisch oder Legierung nach einem der Ansprüche 1 bis 6, **dadurch gekennzeichnet, dass** der Copolymerbestandteil (A) mit Amideinheiten (A1) und Ethereinheiten (A2) in Form von Polyamid-Polyether-Blöcken vorliegt.

8. Gemisch oder Legierung nach einem der Ansprüche 1 bis 7, **dadurch gekennzeichnet, dass** die Amideinheiten (A1) überwiegend aus einer äquimolaren Kombination mindestens eines Diamins und mindestens einer Dicarbonsäure gebildet sind, wobei das Diamin oder die Diamine überwiegend cycloaliphatisch sind und die Dicarbonsäure oder die Dicarbonsäuren überwiegend lineare aliphatische Dicarbonsäuren sind, wobei die Amideinheiten gegebenenfalls, jedoch in einem geringen Anteil, mindestens ein weiteres Polyamidcomonomer enthalten können.

9. Gemisch oder Legierung nach Anspruch 8, **dadurch gekennzeichnet, dass** das oder die cycloaliphatischen Diamine unter Bis(3-methyl-4-aminocyclohexyl)methan (BMACM), para-Aminodicyclohexylmethan (PACM), Isophorondiamin (IPD), Bis(4-aminocyclohexyl)methan (BACM), 2,2-Bis(3-Methyl-4-aminocyclohexyl)propan (BMACP), 2,6-Bis(aminomethyl)norbornan (BAMN) ausgewählt sind.

10. Gemisch oder Legierung nach Anspruch 9, **dadurch gekennzeichnet, dass** nur ein einziges cycloaliphatisches Diamin, insbesondere das Bis(3-methyl-4-aminocyclohexyl)methan, als Diamin zur Bildung der Amideinheiten (A1) verwendet wird.

11. Gemisch oder Legierung nach einem der Ansprüche 9 und 10, **dadurch gekennzeichnet, dass** in der Monomerenzusammensetzung der Amideinheiten (A1) zumindest ein nicht cycloaliphatisches Diamin in einer Menge von höchstens 30 Mol-%, bezogen auf die Diamine der Zusammensetzung, enthalten ist, wobei es sich bei dem nicht cycloaliphatisches Diamin insbesondere um ein lineares, aliphatische Diamin handelt, wie 1,4-Tetramethylendiamin, 1,6-Hexamethylendiamin, 1,9-Nonamethylendiamin und 1,10-Decamethylendiamin.

12. Gemisch oder Legierung nach einem der Ansprüche 8 bis 11, **dadurch gekennzeichnet, dass** die aliphatische(n) Dicarbonsäure(n) unter den aliphatischen Dicarbonsäuren mit 6 bis 36 Kohlenstoffatomen und vorzugsweise 9 bis 18 Kohlenstoffatomen und insbesondere 1,10-Decandisäure. 1,12-Dodecandisäure, 1,14-Tetradecandisäure und 1,18-Octadecandisäure ausgewählt sind.

13. Gemisch oder Legierung nach einem der Ansprüche 8 bis 12, **dadurch gekennzeichnet, dass** mindestens eine nicht aliphatische Dicarbonsäure in der Monomerenzusammensetzung der Amideinheiten in einer Menge von höchstens 15 Mol-%, bezogen auf die Dicarbonsäure der Zusammensetzung, enthalten ist.

14. Gemisch oder Legierung nach Anspruch 13, **dadurch gekennzeichnet, dass** die nicht aliphatische Dicarbonsäure unter den aromatischen Disäuren und insbesondere Isophthalsäure (I), Terephthalsäure (T) und deren Gemischen ausgewählt ist.

15. Gemisch oder Legierung nach einem der Ansprüche 8 bis 14, **dadurch gekennzeichnet, dass** das oder die Monomere, die in einem geringen Anteil in der Monomerenzusammensetzung der Amideinheiten (A1) enthalten sind, unter den Lactamen und alpha,omega-Aminocarbonsäuren ausgewählt sind.

16. Gemisch oder Legierung nach Anspruch 15, **dadurch gekennzeichnet, dass** das oder die Lactame unter den Lactamen mit mindestens 6 Kohlenstoffatomen und insbesondere Caprolactam, Oenantholactam und Lauryllactam ausgewählt sind.

17. Gemisch oder Legierung nach Anspruch 15, **dadurch gekennzeichnet, dass** die alpha,omega-Aminocarbonsäure(n) unter den Säuren mit mindestens 6 Kohlenstoffatomen und insbesondere Aminocapronsäure, 7-Aminoheptansäure, 11-Aminoundecansäure und 12-Aminododecansäure ausgewählt sind.

18. Gemisch oder Legierung nach einem der Ansprüche 1 bis 17, **dadurch gekennzeichnet, dass** der Copolymerbestandteil (A) Amideinheiten (A1) aufweiset, deren Kohlenstoffzahl pro Amid im Mittel mindestens 9 beträgt.

19. Gemisch oder Legierung nach einem der Ansprüche 7 bis 18, **dadurch gekennzeichnet, dass** die Polyamidblöcke des Polymerbestandteils (A) unter BMACM.6, BMACM.9, BMACM.10, BMACM.12, BMACM.14, BMACM.16, BMACM.18 und deren Gemischen oder Copolymeren ausgewählt sind.

20. Gemisch oder Legierung nach einem der Ansprüche 7 bis 19, **dadurch gekennzeichnet, dass** die zahlenmittlere Molmasse der Polyamidblöcke im Bereich von 500 bis 12000 g/mol und vorzugsweise 2000 bis 6000 g/mol liegt.

21. Gemisch oder Legierung nach einem der Ansprüche 1 bis 20, **dadurch gekennzeichnet, dass** die Ethereinheiten (A2) von mindestens einem Polyalkylenetherpolyol und insbesondere einem Polyalkylenetherdiol stammen.

22. Gemisch oder Legierung nach Anspruch 21, **dadurch gekennzeichnet, dass** das Polyalkylenetherdiol unter Polyethylengylcol (PEG), Polypropylenglycol (PPG), Polytrimethylenglycol (PO3G), Polytetramethylenglycol (PTMG) und deren Gemischen oder deren Copolymeren ausgewählt ist.

23. Gemisch oder Legierung nach einem der Ansprüche 7 bis 22, **dadurch gekennzeichnet, dass** die weichen Polyetherblöcke Polyalkylensequenzen mit NH₂-Kettenenden aufweisen.

24. Gemisch oder Legierung nach einem der Ansprüche 7 bis 23, **dadurch gekennzeichnet, dass** die zahlenmittlere Molmasse der Polyetherblöcke im Bereich von 200 und 4000 g/Mol und vorzugsweise 300 bis 1100 g/Mol liegt.

25. Gemisch oder Legierung nach einem der Ansprüche 1 bis 24, **dadurch gekennzeichnet, dass** der Polymerbestandteil (B) unter den Copolyamiden (Ba) ausgewählt ist.

26. Gemisch oder Legierung nach Anspruch 25, **dadurch gekennzeichnet, dass** die Copolyamide (Ba) unter solchen mit einer Schmelztemperatur über 100°C und vorzugsweise über 150°C und einer Glasübergangstemperatur (Tg) unter 65°C ausgewählt sind, die enthalten: (Ba1) aliphatische Amideinheiten oder überwiegend aliphatische Amideinheiten; (Ba2) Ethereinheiten.

27. Gemisch Legierung nach Anspruch 26, **dadurch gekennzeichnet, dass** das Copolyamid (Ba) mit Amideinheiten (Ba1) und Ethereinheiten (Ba2) in Form von Polyamid-Polyether-Blöcken vorliegt.

28. Gemisch oder Legierung nach einem der Ansprüche 25 bis 27, **dadurch gekennzeichnet, dass** die Amideinheiten (Ba1) überwiegend aus einem Lactam oder einer alpha,omega-Aminocarbonsäure und/oder einer äquimolaren Kombination mindestens eines Diamins und mindestens einer Dicarbonsäure gebildet sind, wobei das oder die Diamine überwiegend linear und aliphatisch
sind, wobei die Amideinheiten gegebenenfalls, jedoch in einem geringen Anteil, mindestens ein weiteres Polyamidcomonomer enthalten können.

29. Gemisch oder Legierung nach einem der Ansprüche 25 bis 28, **dadurch gekennzeichnet**, des Copolymerbestandteil (B) Amideinheiten (Ba1) aliphatischer linearer Natur aufweist, deren Kohlenstoffzahl pro Amid im Mittel mindestens 9 beträgt.

30. Gemisch oder Legierung nach einem der Ansprüche 27 bis 29, **dadurch gekennzeichnet, dass** die aliphatischen linearen Polyamidblöcke unter PA 12, PA 11, PA10.10, PA 10.12, PA 10.14, PA 6.10, PA 6.12, PA 6.14 und PA 6.18 ausgewählt sind, wobei sie insbesondere unter PA 10.10, PA 10.12, PA 10.14, PA 6.10, PA 6.12, PA 6.14 und PA 6.18 ausgewählt sind.

31. Gemisch oder Legierung nach einem der Ansprüche 26 bis 30, **dadurch gekennzeichnet, dass** die Ethereinheiten (Ba2) unter den Einheiten ausgewählt sind, die in einem der Ansprüche 21 bis 24 für die Ethereinheiten (A2) angegeben wurden, wobei sie vorteilhaft von gleicher Art sind und eine ähnliche Größe oder Masse aufweisen wie die Ethereinheiten (A2) des Gemisches oder der Legierung.

32. Gemisch oder Legierung nach einem der Ansprüche 25 bis 30, **dadurch gekennzeichnet, dass** das Copolyamid (Ba) eine solche Kristallinität aufweist, dass die Schmelzenthalpie beim zweiten Aufheizen einer ISO DSC (delta Hm(2)) mindestens gleich 25 J/g ist, wobei die Masse dem Anteil der enthaltenen Amideinheiten oder des enthaltenen Polyamids entspricht und das Schmelzen dem der Amideinheiten entspricht.

33. Gemisch oder Legierung nach einem der Ansprüche 1 bis 32, **dadurch gekennzeichnet, dass** die Amideinheiten (A1) zumindest 50 Gew.-% Copolymerbestandteils (A) und die Amideinheiten (Ba1) zumindest 50 Gew.-% des Copolyamids (Ba) ausmachen.

34. Gemisch oder Legierung nach einem der Ansprüche 1 bis 33, **dadurch gekennzeichnet, dass** die Ethereinheiten (A2) zumindest 15 Gew.-% des Copolymerbestandteils (A) und die Ethereinheiten (Ba2) zumindest 15 Gew.-% copolyamids (Ba) ausmachen.

35. Gemisch oder Legierung nach einem der Ansprüche 1 bis 34, **dadurch gekennzeichnet, dass** die teilkristallinen Polyamide und Copolyamide (Bb) Schmelztemperatur (Tm) über 150°C aufweisen.

36. Gemisch oder Legierung nach einem der Ansprüche 1 bis 35, **dadurch gekennzeichnet, dass** die teilkristallinen Polyamide (Bb) ausgewählt sind unter: PA12, PA11, PA10.10, PA10.12, PA10.14, PA6.10, PA6.12, PA6.14 und PA6.18.

37. Gemisch oder Legierung nach einem der Ansprüche 1 bis 36, **dadurch gekennzeichnet, dass** die transparenten Polyamide (Bc) unter den Polyamiden auf Basis von Diaminen BMACM, PACM, IPD und einer Dicarbonsäure mit C14, C12, C10, deren Copolymeren oder Gemischen ausgewählt sind.

38. Gemisch oder Legierung nach einem der Ansprüche 1 bis 37, **dadurch gekennzeichnet**, des Polymerbestandteil (B) im Wesentlichen gebildet ist aus:
- transparenten amorphen Polyamiden oder Copolyamiden und teilkristallinen Polyamiden oder Copolyamiden und insbesondere Legierungen von Polyamiden BMACM.12, PACM.12, IPD.12 oder deren Copolyamiden mit PA12;
- transparenten amorphen Polyamiden oder Copolyamiden und teilkristallinen Polyamiden mit Ethereinheiten;
- teilkristallinen Polyamiden oder Copolyamiden und teilkristallinen Copolyamiden mit Ethereinheiten.

39. Gemisch oder Legierung nach einem der Ansprüche 1 bis 38, **dadurch gekennzeichnet, dass** die Art und Anteile von (A) und (B) und gegebenenfalls einem Polymerbestandteil (C) so sind, dass die resultierende Zusammensetzung amorph ist und eine Glasübergangstemperatur über 75°C aufweist.

40. Gemisch oder Legierung nach einem der Ansprüche 1 bis 38, **dadurch gekennzeichnet, dass** die Art und Anteile von (A) und (B) und gegebenenfalls einem Polymerbestandteil (C) so sind, dass die resultierende Zusammensetzung teilkristallin ist und einen Schmelzpunkt (Tm) über 100°C und vorzugsweise 150°C und eine Schmelzenthalpie beim zweiten Aufheizen einer ISO DSC (delta Hm(2)) über 10 J/g und vorzugsweise über 25 J/g aufweist, wobei die Masse sich auf den Anteil der enthaltenen Amideinheiten oder des enthaltenen Polyamids bezieht und das Schmelzen dem Schmelzen der Amideinheiten entspricht, um eine ausreichende Kristallinität zu garantieren, damit er/sie über der Glasübergangstemperatur (Tg) ausreichend fest bleibt und sich erst über dem Schmelzpunkt Tm verflüssigt.

41. Gemisch oder Legierung nach einem der Ansprüche 1 bis 39, **dadurch gekennzeichnet, dass** die Wahl der Einheiten oder Monomere, die in der Zusammensetzung von (A), (B) und (C) enthalten sind, sowie die Wahl der Anteile dieser Einheiten oder dieser Monomere so sind, dass das resultierende Gemisch oder die resultierende Legierung eine hohe Transparenz aufweist, die so ist, dass die Durchlässigkeit bei 560 nm an einer Platte von 2 mm Dicke über 75% liegt.

42. Gemisch oder Legierung nach einem der Ansprüche 1 bis 41, **dadurch gekennzeichnet, dass** in (A) oder (Ba) und vorzugsweise in (A) und (Ba) die weichen Ethereinheiten sehr hydrophil und vorzugsweise von der Art der Blockpolyether vom Typ (PEG) oder ihrer Copolymeren mit PPG oder PO3G ausgewählt sind, wodurch das Gemisch oder die Legierung antistatische Eigenschaften oder wasserdichte und atmungsaktive Eigenschaften erhalten, d. h. der Durchtritt von Wasserdampf ist möglich, jedoch nicht von flüssigem Wasser, wobei das Gemisch oder die Legierung zusätzlich mit weiteren antistatischen Additiven versehen sein kann, um die antistatische Wirkung insgesamt zu verbessern, und mit Additiven, welche die Kompatibilität des Gemisches mit anderen Polymeren verbessern kann, wobei das Gemisch oder die Legierung dann in der Folge alleine oder auf diese Weise mit Additiven versehen als Additiv für ein anderes Polymer oder Material verwendet werden kann, um diesem zusätzlich antistatische Eigenschaften oder wasserdichte und atmungsaktive Eigenschaften zu verliehen.

43. Gemisch oder Legierung nach Anspruch 42, **dadurch gekennzeichnet, dass** das mit Zusätzen versehene Gemisch oder die mit Zusätzen versehene Legierung transparent ist, wobei die Bestandteile des Gemisches oder der Legierung so ausgewählt sind, dass deren Brechungsindex sehr nahe an dem Brechnungsindex des Polymers oder Materials liegt, dem das Additiv zugesetzt werden soll.

44. Verfahren zur Herstellung eines Gemisches oder einer Legierung nach einem der Ansprüche 1 bis 43, **dadurch gekennzeichnet, dass** die Bestandteile (A), (B) und gegebenenfalls (C), die in Form von Granulat vorliegen, vermischt werden, wobei das Gemisch dann bei einer Temperatur im Bereich von 230 bis 330°C an einer Spritzgießmaschine zur Herstellung der gewünschten Gegenstände und Proben spritzgegossen wird.

45. Verfahren zur Herstellung eines Gemisches oder einer Legierung wie in einem der Ansprüche 1 bis 43 definiert, **dadurch gekennzeichnet, dass** die Bestandteile (A), (B) und gegebenenfalls (C) im geschmolzenen Zustand und insbesondere an einem Extruder bei einer Temperatur im Bereich von 230 bis 330°C vermischt werden und in Form von Granulat gewonnen werden, wobei das Granulat im Anschluss bei einer Temperatur im Bereich von 230 bis 330°C an einer Spritzgießmaschine spritzgegossen wird, um die gewünschten Gegenstände und Proben herzustellen.

46. Verfahren zur Herstellung eines Gemisches oder einer Legierung nach Anspruch 45, wobei das Gemisch oder die Legierung Additive im Bestandteil (Ba) aufweist, **dadurch gekennzeichnet, dass**
- in einem ersten Schritt der Bestandteil (Ba) im geschmolzenen Zustand und insbesondere an einem Extruder mit den Additiven vermischt wird, wobei die Zusammensetzung dann in Form von Granulat gewonnen wird; und
- in einem zweiten Schritt die im ersten Schritt erhaltene Zusammensetzung mit dem Granulat des Polymerbestandteils (A) vermischt wird.

47. Geformter Gegenstand, beispielsweise Fasern, Gewebe, Filme, Folien, Stäbe, Röhren, Spritzteile, insbesondere transparent oder transluzid, der das Gemisch oder die Legierung wie in einem der Ansprüche 1 bis 43 definiert enthält, wobei er in Form eines Gemisches in trockenem Zustand oder nach Compoundieren an einem Extruder realisiert werden kann.

48. Gegenstand nach Anspruch 39, **dadurch gekennzeichnet, dass** es sich um einen Sportartikel oder ein Element eines Sportartikels handelt, beispielsweise ein Element eines Sportschuhs, ein Sportgerät, wie Schlittschuhe, Skibindungen, Schneeschuhe, Schläger, Bretter, Hufeisen, Flossen, Golfbälle, einen Freizeitartikel, einen Heimwerkerartikel, ein Werkzeug oder ein Straßengerät, welches klimatischen und mechanischen Angriffen ausgesetzt ist, einen Schutzartikel, wie Visiere von Helmen, Brillen, Brillenbügel, ein Kraftfahrzeugelement, wie Scheinwerferabdeckungen, Rückspiegel, Kleinteile für Geländefahrzeuge, Kraftstoffbehälter, insbesondere für Mopeds, Motorräder und Motorroller.
